# EUROPEAN PATENT SPECIFICATION

(11) **EP 2 890 166 B1**
(45) Date of publication and mention of the grant of the patent: **24.10.2018**
(21) Application number: 13832128.6
(22) Date of filing: 27.08.2013
(51) Int. Cl.: H04W 8/18, H04W 12/06, H04W 12/08, H04W 36/00

(54) **METHOD, USER EQUIPMENT AND REMOTE MANAGEMENT PLATFORM FOR HANDOVER BETWEEN OPERATOR NETWORKs**
VERFAHREN, BENUTZERVORRICHTUNG UND REMOTE-MANAGEMENTPLATTFORM FÜR HANDOVER ZWISCHEN BETREIBERNETZEN
PROCÉDÉ, ÉQUIPEMENT D'UTILISATEUR ET PLATE-FORME DE GESTION À DISTANCE, POUR HANDOVER ENTRE RÉSEAUX D'OPÉRATEUR

(30) Priority: 27.08.2012 CN 201210307982
(43) Date of publication of application: 01.07.2015
(73) Proprietor: Huawei Device (Dongguan) Co., Ltd., Dongguan, Guangdong, PRC, 523808 (CN)
(72) Inventor: JIN, Hui, Shenzhen Guangdong 518129 (CN)
(74) Representative: Pfenning, Meinig & Partner mbB
(86) International application number: PCT/CN2013/082384
(87) International publication number: WO 2014/032570

(56) References cited:
- WO-A1-2011/113355
- WO-A2-2011/115407
- CN-A- 102 026 149
- CN-A- 102 026 150
- CN-A- 102 036 222
- CN-A- 102 047 629
- US-A1- 2008 051 088
- US-A1- 2009 186 601
- US-A1- 2010 228 967
- US-A1- 2011 217 952
- US-A1- 2012 196 570

## Description

### TECHNICAL FIELD

The present invention relates to the communications field, and in particular, to a method for a handover between operator networks, a user equipment, and a remote management platform.

### BACKGROUND

With the continuous development of communications technologies, people are increasingly relying on mobile phones. During actual use, considering roaming fees of the mobile phones, people want to change operator networks in different areas or within different time segments, so as to provide services for the mobile phones. For a conventional UE (User Equipment, user equipment), that is, a mobile phone, a UICC (Universal Integrated Circuit Card, universal integrated circuit card) of the UE is customized depending on an operator network; and after the UICC is delivered from a factory, subscription information of the operator network stored in the UICC is unchangeable. Therefore, the objective of changing an operator network can be achieved only by replacing a card.

In the prior art, a method for changing an operator network without replacing a card is proposed. Specifically, a corresponding remote management platform is provided on a network side to deliver subscription information of an operator network to a UE by using a server, so that the UE changes the operator network according to the subscription information.

In a process of implementing the present invention, the prior art has at least the following problems:
In the existing method for changing an operator network, a remote management platform requests subscription information of an operator network from an operator server; however, in a process of interaction between the remote management platform and the operator server, the operator server does not perform security control on a user.

A UE that is used by an unauthorized user, such as a user that maliciously enters arrears, a user of a stolen device, or a user of a cloned card, may still change to the operator network, resulting in poor security performance.

US2009/0186601A provides a method for performing pre-authentication in case of an inter-RAT handover managed by different administrative domains. The method for performing pre-authentication before a handover in order to quickly perform an Inter-Radio Access Technology (Inter-RAT) handover includes, transmitting a message having terminal information needed for the pre-authentication to a target authentication server, and receiving security-associated information of a target network from the target authentication server.

US2012/0196570A discloses a method and apparatus for allocating an identifier to a terminal in a communications network. A core network controlling node, such as a Mobility Management Entity (MME) receives an International Mobile Subscriber Identity (IMSI) and an International Mobile Equipment Identity (IMEI) from the terminal. Subscription information is determined using both the IMSI and the IMEI.

US2011/0217952A relates to a method and arrangement in a serving Radio Network Controller, SRNC for controlling inter RAT handover to E-UTRAN of a UE with E-UTRA capability operating in a serving network comprising said SRNC, wherein the SRNC receives, from a Serving GPRS Support Node, SGSN, security keys generated at authentication and key agreement, AKA, upon attachment of the UE to the serving network; characterized in the steps of determining which type of UICC the UE is equipped with by analyzing the security keys received from SGSN; using the knowledge of which type of UICC the UE is equipped with to base a decision on whether to allow handover of the UE to E-UTRAN.

### SUMMARY

In order to improve security when a user equipment performs a handover between operator networks, embodiments of the present invention provide a method for a handover between operator networks, a user equipment, and a remote management platform, as defined in the appended independent claims.

The embodiments and/or examples and/or aspects of the following description which are not covered by the appended claims are considered as not being part of the present invention.

According to a first aspect, a method for a handover between operator networks is provided, where the method includes:
sending, by a user equipment UE, a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and
receiving the indication of the eUICC, and performing or not performing a handover to the second operator network according to the indication.

With reference to the first aspect, in a first possible implementation manner of the first aspect, the sending, by a user equipment UE, a request message to an embedded universal integrated circuit card eUICC when the UE learns that it needs to perform a handover from a first operator network to a second operator network includes:
detecting, by the UE, whether a preset handover condition is met; and
sending the request message to the eUICC when the UE learns through detection that the preset handover condition is met.

With reference to the first possible implementation manner of the first aspect, in a second possible implementation manner, the preset handover condition includes at least any one of the following: the UE is out of coverage of the first operator network, a geographic location of the UE changes, a clock time of the UE is within a preset time segment, or a preset event occurs on the UE.

With reference to the first aspect, in a third possible implementation manner, the sending, by a UE, a request message to an embedded universal integrated circuit card eUICC includes:
determining, by the UE, whether the eUICC stores subscription information of the second operator network; and
if the eUICC stores subscription information of the second operator network, sending the request message for performing a handover to the second operator network to the eUICC, so that the eUICC requests the remote management platform of the second operator network to perform a handover to the second operator network; or
if the eUICC does not store subscription information of the second operator network, sending a request message for acquiring the subscription information of the second operator network to the eUICC, so that the eUICC requests acquisition of the subscription information of the second operator network from the remote management platform of the second operator network.

With reference to the first aspect, in a fourth possible implementation manner, the receiving the indication of the eUICC, and performing or not performing a handover to the second operator network according to the indication includes:
receiving the indication of the eUICC, and when the indication is performing a handover to the second operator network, performing, by the UE, a handover to the second operator network; or
receiving the indication of the eUICC, and when the indication is not performing a handover to the second operator network, not performing, by the UE, a handover to the second operator network.

With reference the fourth possible implementation manner of the first aspect, in a fifth possible implementation manner, the receiving the indication of the eUICC, and performing or not performing a handover to the second operator network according to the indication specifically includes:
receiving the indication of the eUICC, and when the indication is performing a handover to the second operator network and the indication carries related configuration information of a second operator network, performing, by the UE, configuration according to the related configuration information of the second operator network, and performing a handover to the second operator network.

According to a second aspect, a user equipment is provided, where the user equipment includes:
a transceiver, configured to receive and send a message; and
a processor, coupled to the transceiver and configured to perform the foregoing method for a handover between operator networks.

According to a third aspect, a method for a handover between operator networks is provided, which includes:
sending, by an eUICC disposed in a UE, a request message to a remote management platform of a second operator network through the UE when the eUICC learns that the UE needs to perform a handover from a first operator network to the second operator network, where the request message carries an identity of the eUICC, so that the remote management platform of the second operator network performs verification on the eUICC according to at least the identity, and sends an indication message to the eUICC through the UE according to a verification result; and
receiving, by the eUICC, the indication message, and instructing, according to the indication message, the UE to perform or not perform a handover to the second operator network.

With reference to the third aspect, in a first possible implementation manner, the sending, by an eUICC disposed in a UE, a request message to a remote management platform of a second operator network through the UE when the eUICC learns that the UE needs to perform a handover from a first operator network to the second operator network includes:
determining, by the eUICC, whether subscription information of the second operator network is stored locally; and
if the subscription information of the second operator network is stored locally, sending a first request message to the remote management platform of the second operator network through the UE, where the first request message is used to request performing a handover to the second operator network, and the first request message carries the identity of the eUICC; or
if the subscription information of the second operator network is not stored locally, sending a second request message to the remote management platform of the second operator network through the UE, where the second request message is used to request acquisition of the subscription information of the second operator network, and the second request message carries the identity of the eUICC.

With reference to the third aspect, in a second possible implementation manner, the receiving, by the eUICC, the indication message, and instructing, according to the indication message, the UE to perform or not perform a handover to the second operator network includes:
receiving, by the eUICC, the indication message, and when the indication message indicates that the eUICC verification fails, sending, by the eUICC, no handover instruction to the UE, or instructing, by the eUICC, the UE not to perform a handover to the second operator network; or
receiving, by the eUICC, the indication message, and when the indication message indicates that the eUICC verification succeeds, instructing, by the eUICC, the UE to perform a handover to the second operator network.

With reference to the second possible implementation manner of the third aspect, in a third possible implementation manner, when the indication message indicates that the eUICC verification fails, the sending, by the eUICC, no handover instruction to the UE, or instructing, by the eUICC, the UE not to perform a handover to the second operator network includes:
when the indication message indicates locking of the eUICC, locking, by the eUICC, the eUICC, and sending, by the eUICC, no handover instruction to the UE, or instructing, by the eUICC, the UE not to perform a handover to the second operator network; or
when the indication message indicates that the UE is in arrears, sending, by the eUICC, no handover instruction to the UE, or instructing, by the eUICC, the UE not to perform a handover to the second operator network.

According to a fourth aspect, an embedded universal integrated circuit card is provided, where the embedded universal integrated circuit card includes:
a transceiver, configured to receive and send a message; and
a processor, coupled to the transceiver and configured to perform the foregoing method for a handover between operator networks.

According to a fifth aspect, a method for a handover between operator networks is provided, including:
receiving a request message that is sent through a UE by an embedded universal integrated circuit card eUICC disposed in the UE, where the request message carries an identity of the eUICC;
performing verification on the eUICC according to the identity of the eUICC to acquire a verification result; and
sending an indication message to the eUICC through the UE according to the verification result, so as to instruct the eUICC whether to allow a handover to a second operator network.

With reference to the fifth aspect, in a first possible implementation manner, the performing verification on the eUICC according to the identity of the eUICC to acquire a verification result includes:
when receiving the request message sent by the eUICC, acquiring subscription information of a first operator network from the eUICC;
sending, according to the acquired subscription information of the first operator network, a verification request message to the first operator network corresponding to the subscription information of the first operator network, where the verification request message carries the identity of the eUICC, so that the first operator network performs verification on the UE according to the identity of the eUICC, and returns a verification result; and
receiving the verification result.

With reference to the fifth aspect, in a second possible implementation manner, the performing verification on the eUICC according to the identity of the eUICC to acquire a verification result includes:
when receiving the request message sent by the eUICC, acquiring information about a remote management platform corresponding to subscription information of a first operator network from the eUICC;
sending a verification request message to the remote management platform of the first operator network according to the information about the remote management platform corresponding to the subscription information of the first operator network, so that the remote management platform of the first operator network performs verification on the UE, and returns a verification result; and
receiving the verification result.

With reference to the fifth aspect, in a third possible implementation manner, the sending an indication message to the eUICC through the UE according to the verification result, so as to instruct the eUICC whether to allow handover to a second operator network includes:
when the verification result indicates that the verification succeeds, sending the indication message to the eUICC by using the UE, so as to instruct the eUICC to perform a handover to the second operator network; or
when the verification result indicates that the verification fails, and the UE is an unauthorized device or the eUICC is an unauthorized eUICC, sending the indication message to the eUICC through the UE, so that the eUICC locks itself, and the eUICC sends no handover instruction to the UE, or the eUICC instructs the UE not to perform a handover to the second operator network; or
when the verification result indicates that the eUICC verification fails, and the UE is in arrears, sending the indication message to the eUICC through the UE to indicate that the UE is in arrears, so that the eUICC sends no handover instruction to the UE, or the eUICC instructs the UE not to perform a handover to the second operator network.

According to a sixth aspect, a remote management platform is provided, where the remote management platform includes:
a transceiver, configured to receive and send a message; and
a processor, coupled to the transceiver and configured to perform the foregoing method for a handover between operator networks.

According to a seventh aspect, a user equipment is provided, including:
a sending module, configured to send a request message to an embedded universal integrated circuit card eUICC when it is learned that the UE needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message;
a receiving module, configured to receive the indication of the eUICC; and
a handover module, configured to perform or not perform a handover to the second operator network according to the indication.

With reference to the seventh aspect, in a first possible implementation manner, the user equipment further includes:
a detecting module, configured to detect whether the UE meets a preset handover condition; where:
correspondingly, the sending module is specifically configured to send the request message to the eUICC when the detecting module learns through detection that the UE meets the preset handover condition.

With reference to the first possible implementation manner of the seventh aspect, in a second possible implementation manner, the preset handover condition includes at least any one of the following: the UE is out of coverage of the first operator network, a geographic location of the UE changes, a clock time of the UE is within a preset time segment, or a preset event occurs on the UE.

With reference to the seventh aspect, in a third possible implementation manner, the user equipment further includes:
a determining module, configured to determine whether the eUICC stores subscription information of the second operator network, where:
correspondingly, the sending module is specifically configured to send a first request message to the eUICC when the eUICC stores the subscription information of the second operator network, so that the eUICC requests the remote management platform of the second operator network to perform a handover to the second operator network; and
the sending module is further configured to send a second request message to the eUICC when the eUICC stores no subscription information of the second operator network, so that the eUICC requests acquisition of the subscription information of the second operator network from the remote management platform of the second operator network.

With reference to the seventh aspect, in a fourth possible implementation manner, the handover module is specifically configured to perform a handover to the second operator network when the indication is performing a handover to the second operator network; or
not perform a handover to the second operator network when the indication is not performing a handover to the second operator network.

With reference to the fourth possible implementation manner of the seventh aspect, in a fifth possible implementation manner, the handover module is specifically configured to, when the indication is performing a handover to the second operator network and the indication carries related configuration information of a second operator network, perform configuration according to the related configuration information of the second operator network, and perform a handover to the second operator network.

According to an eighth aspect, an embedded universal integrated circuit card is provided, including:
a sending module, configured to send a request message to a remote management platform of a second operator network through a UE when the embedded universal integrated circuit card eUICC disposed in the UE learns that the UE needs to perform a handover from a first operator network to the second operator network, where the request message carries an identity of the eUICC, so that the remote management platform of the second operator network performs verification on the eUICC according to at least the identity, and sends an indication message to the eUICC through the UE according to a verification result;
a receiving module, configured to receive the indication message; and
a handover module, configured to instruct, according to the indication message, the UE to perform or not perform a handover to the second operator network.

With reference to the eighth aspect, in a first possible implementation manner, the embedded universal integrated circuit card further includes:
a determining module, configured to determine whether subscription information of the second operator network is stored locally, where:
correspondingly, the sending module is further configured to, when the subscription information of the second operator network is stored locally, send a first request message to the remote management platform of the second operator network through the UE, where the first request message is used to request performing a handover to the second operator network, and the first request message carries the identity of the eUICC; and
the sending module is further configured to, when the subscription information of the second operator network is not stored locally, send a second request message to the remote management platform of the second operator network through the UE, where the second request message is used to request acquisition of the subscription information of the second operator network, and the second request message carries the identity of the eUICC.

With reference to the eighth aspect, in a second possible implementation manner, the handover module is specifically configured to, when the indication message indicates that the eUICC verification fails, send no handover instruction to the UE, or instruct the UE not to perform a handover to the second operator network; or
when the indication message indicates that the eUICC verification succeeds, instruct the UE to perform a handover to the second operator network.

With reference to the second possible implementation manner of the eighth aspect, in a third possible implementation manner, the handover module is further specifically configured to, when the indication message indicates locking of the eUICC, lock the eUICC, and send no handover instruction to the UE, or instruct the UE not to perform a handover to the second operator network; or
when the indication message indicates that the UE is in arrears, send no handover instruction to the UE, or instruct the UE not to perform a handover to the second operator network.

According to a ninth aspect, a remote management platform is provided, including:
a receiving module, configured to receive a request message sent by a UE, where the request message carries an identity of an embedded universal integrated circuit card eUICC disposed in the UE;
a verifying module, configured to perform verification on the eUICC according to the identity to acquire a verification result; and
a sending module, configured to send an indication message to the eUICC through the UE according to the verification result, so as to instruct the eUICC to hand over or skip handing over between operator networks for the UE.

With reference to the ninth aspect, in a first possible implementation manner, the verifying module is specifically configured to, when the request message sent by the UE is received, acquire subscription information of a first operator network from the eUICC;
the verifying module is further configured to send, according to the acquired subscription information of the first operator network, a verification request message to the first operator network corresponding to the subscription information of the first operator network, where the verification request message carries the identity of the eUICC, so that the first operator network performs verification on the UE according to the identity of the eUICC, and returns a verification result; and
correspondingly, the receiving module is further configured to receive the verification result.

With reference to the ninth aspect, in a second possible implementation manner, the verifying module is specifically configured to, when a request message sent by the eUICC is received, acquire information about a remote management platform corresponding to subscription information of a first operator network from the eUICC;
the verifying module is further configured to send a verification request message to the remote management platform of the first operator network according to the information about the remote management platform corresponding to the subscription information of the first operator network, so that the remote management platform of the first operator network performs verification on the UE, and returns a verification result; and
correspondingly, the receiving module is configured to receive the verification result.

With reference to the ninth aspect, in a third possible implementation manner, the sending module is specifically configured to, when the verification result indicates that the verification succeeds, send the indication message to the eUICC through the UE, so as to instruct the eUICC to perform a handover to the second operator network; or
when the verification result indicates that the eUICC verification fails, and the UE is an unauthorized device or the eUICC is an unauthorized eUICC, send the indication message to the eUICC through the UE, so that the eUICC locks itself, and the eUICC sends no handover instruction to the UE, or the eUICC instructs the UE not to perform a handover to the second operator network; or
when the verification result indicates that the verification fails, and the UE is in arrears, send the indication message to the eUICC through the UE to indicate that the UE is in arrears, so that the eUICC sends no handover instruction to the UE, or the eUICC instructs the UE not to perform a handover to the second operator network.

The technical solutions provided in the embodiments of the present invention bring the following beneficial effects:
In the embodiments of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for a handover between operator networks according to an embodiment of the present invention;
FIG. 2 is a flowchart of a method for a handover between operator networks according to an embodiment of the present invention;
FIG. 3 is a flowchart of a method for a handover between operator networks according to an embodiment of the present invention;
FIG. 4 is a flowchart of a method for a handover between operator networks according to an embodiment of the present invention;
FIG. 5 is a flowchart of a method for a handover between operator networks according to an embodiment of the present invention;
FIG. 6 is a schematic structural diagram of a user equipment according to an embodiment of the present invention;
FIG. 7 is a schematic structural diagram of an embedded universal integrated circuit card according to an embodiment of the present invention;
FIG. 8 is a schematic structural diagram of a remote management platform according to an embodiment of the present invention;
FIG. 9 is a schematic structural diagram of a user equipment according to an embodiment of the present invention;
FIG. 10 is a schematic structural diagram of an embedded universal integrated circuit card according to an embodiment of the present invention; and
FIG. 11 is a schematic structural diagram of a remote management platform according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

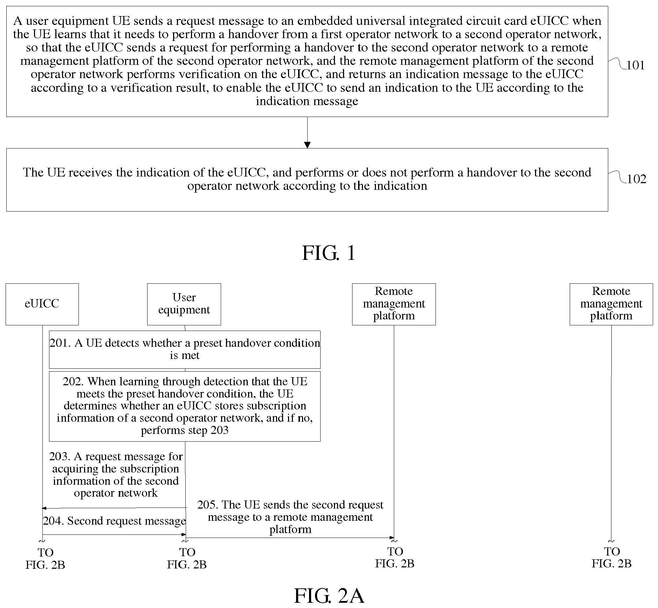

FIG. 1 is a flowchart of a method for a handover between operator networks according to an embodiment of the present invention. This embodiment is executed by a UE (User Equipment, user equipment). Referring to FIG. 1, this embodiment specifically includes the following:
101. A user equipment UE sends a request message to an eUICC (embedded Universal Integrated Circuit Card, embedded universal integrated circuit card) when the UE learns that it needs to perform a handover from a first operator network to a second operator network, so that the eUICC sends a request for a handover to the second operator network to a remote management platform of the second operator network, and the remote management platform of the second operator network performs verification on the eUICC.

For the present invention, that the remote management platform of the second operator network performs verification on the eUICC indicates that the remote management platform of the second operator network sends, directly or indirectly, a verification request message to the first operator network, where the verification request message carries an identity of the eUICC, so that the first operator network performs verification on the eUICC according to the identity of the eUICC, and returns, directly or indirectly, a verification result to the remote management platform of the second operator network. When the remote management platform of the second operator network and a remote management platform of the first operator network are a same remote management platform, the remote management platform of the second operator network sends the verification request message directly to the first operator network, where the verification request message carries the identity of the eUICC, so that the first operator network performs verification on the eUICC according to the identity of the eUICC, and sends the verification result directly to the remote management platform of the second operator network. When the remote management platform of the second operator network and the remote management platform of the first operator network are not the same remote management platform, the remote management platform of the second operator network sends the verification request message to the remote management platform of the first operator network, where the verification request message carries the identity of the eUICC, so that the remote management platform of the first operator network sends the verification request message to the first operator network, and the first operator network performs verification on the eUICC according to the identity of the eUICC, and sends the verification result to the remote management platform of the first operator network, and then the remote management platform of the first operator network sends the verification result to the remote management platform of the second operator network.

However, for the eUICC, an indication message received by the eUICC is sent by the remote management platform of the second operator network according to the verification result received by the remote management platform.

102. The UE receives an indication from the eUICC, and performs or does not perform a handover to the second operator network according to the indication.

In a method provided in this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE.

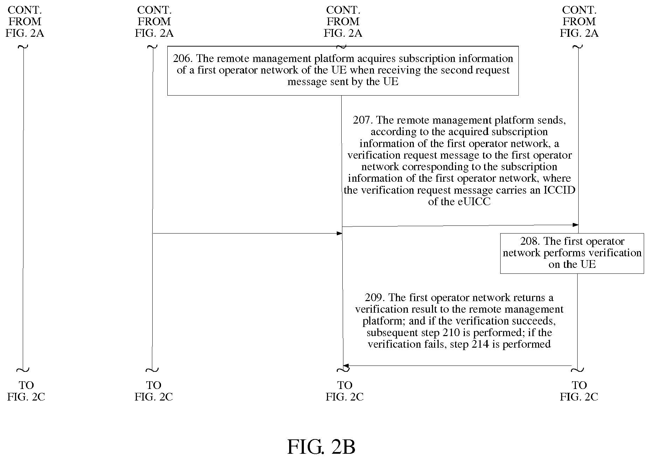

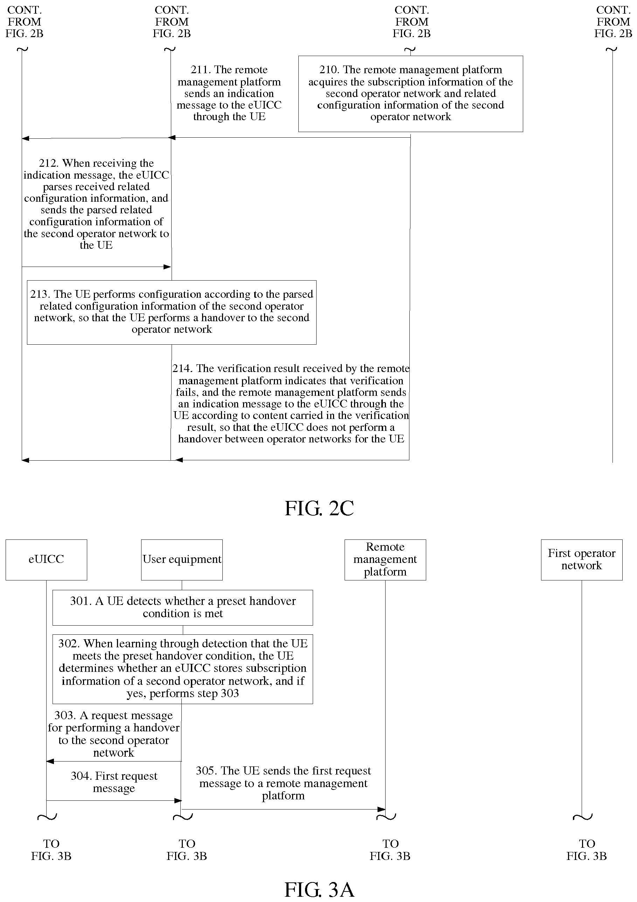

FIG. 2 is a flowchart of a method for a handover between operator networks according to an embodiment of the present invention. For ease of description, an operator network that currently serves a UE or previously served the UE is referred to as a first operator network, and a target operator network to which a handover is performed is referred to as a second operator network. Interaction bodies in this embodiment include a UE, an eUICC card disposed in the UE, a remote management platform, a first operator network, and a second operator network, where the UE may be specifically a mobile terminal, an M2M (Machine to Machine, machine to machine) terminal, or the like; the mobile terminal may be a mobile phone, a tablet computer, an MP3 (Moving Picture Experts Group Audio Layer III, moving picture experts group audio layer 3), a PDA (Personal Digital Assistant, personal digital assistant), or the like; and the remote management platform is configured to manage subscription information in an eUICC, including downloading, deleting, and modifying the subscription information. The remote management platform may be an SM (Subscription Manager, subscription manager), or the remote management platform may include an SM-SR (Subscription Manager-Secure Routing, subscription manager-secure routing) and an SM-DP (Subscription Manager-Data Preparation, subscription manager-data preparation). It should be noted that the UE has subscribed to the second operator network, that is, the UE is allowed to acquire and use subscription information of the second operator network, so that the second operator network serves the UE. After the UE subscribes to the second operator network, the remote management platform stores an identity of the eUICC in the UE, for example, an ICCID (Integrated Circuit Card Identity, integrated circuit card identity), so that when the identity is received, the second operator network is allowed to serve the UE. In order to describe a specific procedure in detail, this embodiment is described merely by assuming a scenario in which the UE did not perform a handover between operator networks and the eUICC in the UE does not store the subscription information of the second operator network. Referring to FIG. 2, this embodiment specifically includes the following:
201. The UE detects whether a preset handover condition is met.

In this embodiment, the preset handover condition may include at least any one of the following: the UE is out of coverage of the first operator network, a geographic location of the UE changes, a clock time of the UE is within a preset time segment, or a preset event occurs on the UE.
(1) The geographic location of the UE changes. In order to allow the UE to use different operator networks in different geographical areas according to an actual requirement, a change of the geographic location may be used as the preset handover condition for triggering a determining process in step 202. Specifically, when the UE detects that its geographic location changes, for example, detects that the UE roams from one geographical area to another, the UE meets the preset handover condition, and triggers the determining process in step 202. Specifically, the UE may learn its geographic location according to cell broadcast or a GPS (Global Positioning System, global positioning system), and determine, according to its current geographic location, whether the geographic location changes; or may learn, in another manner, whether the geographic location changes. The present invention is not limited thereto.
(2) The clock time of the UE is within the preset time segment. In order to allow the UE to use different operator networks within different time segments, that the clock time is within the preset time segment may be used as the preset handover condition for triggering the determining process in step 202. Specifically, the preset time segment and an operator network that serves the UE within the preset time segment may be set for the UE; the UE detects whether the clock time of the UE is within the preset time segment; and when the clock time of the UE is within the preset time segment, the UE meets the preset handover condition, and triggers the determining process in step 202. There may be one or more preset time segments, which is not specifically limited in the present invention. For example, an operator network that currently serves the UE is China Unicom, a preset time segment is 17:00-20:00, and an operator network that provides a service within the preset time segment is China Mobile; accordingly, China Unicom serves the UE beyond 17:00-20:00, and when a clock time is within the preset time segment, that is, 17:00-20:00, the UE meets the preset handover condition and triggers step 202 and the subsequent process, so that China Mobile serves the UE within 17:00-20:00. That the clock time is within the preset time segment may be understood as that the clock time is within a preset time, where the preset time may be one time point within the preset time segment, for example, may be any one time within the preset time segment 17:00-20:00.
(3) The preset event occurs on the UE. The preset event is used as the preset handover condition for triggering step 202 and the subsequent process, so that after the preset event occurs on the UE, an operator network different from that before the preset event occurs provides a service. For example, the preset event is Internet access. If a first operator network that serves the UE is China Mobile, when an Internet access event occurs, step 202 and the subsequent process are triggered, so that the UE performs a handover to a second operator network (assuming that it is China Telecom), and that China Telecom always provides a service during an entire process of Internet access.
(4) The UE is out of coverage of the first operator network (that is, a current network). When the UE is out of coverage of the current network, the UE may directly perform a handover to another operator network.

Specifically, when the UE detects that signal strength of the first operator network is smaller than a preset threshold, it may be considered that the UE is out of the coverage of the first operator network, where signal strength detection is disclosed in the prior art, and is not described any further in the present invention.

Optionally, before step 201, the method may further include: setting the preset handover condition of the UE. The preset handover condition may be set and adjusted by a user according to a use requirement, which is not specifically limited in the present invention. In addition, the UE may provide an interface for setting the preset handover condition, so that the user sets the preset handover condition; in the interface, a step of prompting may be provided for the user, so that the user may set the preset handover condition according to the step of prompting.

202. When learning through detection that the UE meets the preset handover condition, the UE determines whether an eUICC stores subscription information of a second operator network; if no, performs step 203.

When learning through detection that the UE meets the preset handover condition, the user equipment UE may learn that it needs to perform a handover from the first operator network to the second operator network. The user equipment UE may also learn, in another manner, that it needs to perform a handover from the first operator network to the second operator network, for example, by receiving a handover instruction of the user, which is not limited in this embodiment of the present invention.

The subscription information of the second operator network is subscription information between the UE and the second operator network, and is a basis for determining whether the UE has subscribed to the second operator network. Specifically, the subscription information may be a telephone number of the UE. By means of determining whether the eUICC of the UE stores the subscription information of the second operator network, it may be determined whether the UE performs a handover to the second operator network for the first time. If the eUICC stores the subscription information of the second operator network, the UE previously performed a handover to the second operator network; if the eUICC of the UE stores no subscription information of the second operator network, the UE performs a handover to the second operator network for the first time.

A person skilled in the art may learn that if it is detected that the UE does not meet the preset handover condition, the first operator network may continue to serve the UE.

It should be noted that this embodiment is described merely by assuming that the eUICC of the UE stores no subscription information of the second operator network; in subsequent embodiments, a scenario in which the eUICC stores the subscription information of the second operator network will be specifically described.

In addition, in step 202, the UE initiates a determining request to the eUICC when the preset handover condition is met, so that the eUICC determines whether the eUICC stores the subscription information of the second operator network, and notifies the UE of a determining result; or the UE may query from the eUICC whether currently stored subscription information of operator networks includes the subscription information of the second operator network, and if yes, determine that the eUICC currently stores the subscription information of the second operator network.

The subscription information of the operator network described in the present invention may include an operational profile (operational profile) required for accessing the operator network.

203. The UE sends a request message for acquiring the subscription information of the second operator network to the eUICC, so that the eUICC requests acquisition of the subscription information of the second operator network from a remote management platform of the second operator network.

Further, the eUICC sends, to the UE, a request message for establishing a data path; when the UE receives the request message for establishing a data path, the UE establishes a data path to the remote management platform according to information about the remote management platform. That the eUICC sends, to the UE, a request message for establishing a data path may be understood as that the eUICC initiates, to the UE by using the first operator network or an MVNO (Mobile Virtual Network Operator, mobile virtual network operator) network, the request message for establishing a data path, where the request message for establishing a data path is used to request the UE to establish a data path between the UE and the remote management platform.

The information about the remote management platform is stored in the eUICC. A person skilled in the art may learn that the information about the remote management platform may include an address of the remote management platform, and the like.

It should be noted that the eUICC establishes a data path to the remote management platform by using the UE; although the UE has a forwarding function in between, it is allowed that the UE does not parse content exchanged between the eUICC and the remote management platform. Therefore, logically, the eUICC and the remote management platform may be directly connected.

Subsequent signaling interactions between the UE and the remote management platform in this embodiment are implemented by using the data path established by the UE to the remote management platform.

204. The eUICC sends a second request message to the UE, where the second request message is used to request acquisition of the subscription information of the second operator network, and the second request message carries an ICCID of the eUICC.

It should be noted that the eUICC sends the second request message to the UE, and the UE sends the request to the remote management platform; in essence, this process is an interaction between the eUICC and the remote management platform.

205. The UE sends the second request message to the remote management platform, where the second request message carries the ICCID of the eUICC.

This embodiment of the present invention is described merely by assuming that the identity of the eUICC is the ICCID. Preferably, the identity of the eUICC may also be an IMSI (International Mobile Subscriber Identity, international mobile subscriber identity), an IMEI (International Mobile Equipment Identity, international mobile equipment identity), or the like. Optionally, the second request message carries the ICCID, and may further carry another identity of the eUICC, such as an IMSI and/or an IMEI.

Steps 204 to 205 are a process in which the eUICC requests acquisition of the subscription information of the second operator network from the remote management platform of the second operator network.

206. The remote management platform acquires subscription information of the first operator network of the UE when receiving the second request message sent by the UE.

It should be noted that the UE may store one or more subscription information of first operator network, which may include subscription information of an operator network that currently serves the UE and subscription information of another operator network that previously served the UE. Therefore, optionally, when receiving the second request message sent by the UE, the remote management platform may acquire one or more subscription information of first operator network of the UE from the remote management platform, that is, may acquire subscription information of any one first operator network of the UE from the remote management platform, acquire subscription information of all first operator networks of the UE from the remote management platform, or acquire subscription information of a plurality of first operator networks of the UE from the remote management platform.

Specifically, acquiring the subscription information of the first operator network of the UE includes but is not limited to any one of the following methods: (1) Determine, according to the ICCID of the eUICC, whether the remote management platform prestores the subscription information of the first operator network of the UE; and if yes, the remote management platform acquires the locally-stored subscription information of the first operator network of the UE; if no, the remote management platform sends a message for acquiring subscription information of an operator network to the UE, and the UE acquires the subscription information of the first operator network from the eUICC of the UE, so that the UE returns the subscription information of the first operator network that is currently stored by the UE. (2) When the second request message sent by the UE carries the subscription information of the first operator network of the UE, acquire the subscription information of the first operator network in the second request message.

207. The remote management platform sends, according to the acquired subscription information of the first operator network, a verification request message to the first operator network corresponding to the subscription information of the first operator network, where the verification request message carries the ICCID of the eUICC.

The verification request message carries the ICCID. Further, the verification request message may further carry the IMSI and/or the IMEI.

It should be noted that, the subscription information of the first operator network stored on the UE may include the subscription information of an operator network that currently serves the UE and subscription information of another operator network that previously served the UE; therefore, the verification request message may be sent to one or more objects. This embodiment is described merely by assuming that the sending object is one operator network. For example, first operator networks of a terminal device are Beijing Mobile and Beijing Telecom; when acquiring information about the first operator networks of the UE, a remote management platform sends a verification request message to the first operator networks corresponding to the subscription information about the first operator networks, that is, Beijing Mobile and Beijing Telecom.

208. When receiving the verification request message sent by the remote management platform, the first operator network performs, according to the ICCID carried in the verification request message, verification on the eUICC disposed in the UE.

Verification performed on the UE is to verify, according to the ICCID carried in the verification request message, whether the UE is an authorized device, which may specifically include: when the verification request message carries only the ICCID of the eUICC, the first operator network may acquire, by using the ICCID, an IMEI corresponding to the ICCID, and verify, according to the IMEI and the ICCID, whether the UE is a device in arrears and/or whether the UE is a stolen device; and
further, when the verification request message carries the ICCID and the IMEI, verify, according to the IMEI and the ICCID, whether the UE is a device in arrears, and/or whether the UE is a stolen device, and/or whether an eUICC card in the UE is a cloned card.

Verification performed on the UE may specifically include at least one of the following:
(1) Verify whether the UE is a device in arrears, which may specifically include: the first operator network acquires an IMSI (International Mobile Subscriber Identity, international mobile subscriber identity) of a user according to the ICCID, queries a charging server according to the IMSI, and determines, according to user charging information in the charging server, whether a user corresponding to the IMSI is in arrears; and if it is learned, by query, that the user is in arrears, a verification result sent to the remote management platform in step 209 indicates that the verification fails, where the verification result includes non-payment information, so as to indicate that the UE is in arrears; if it is learned, by query, that the UE is not in arrears, the verification result sent to the remote management platform indicates that the verification succeeds.
(2) Verify whether the UE is a stolen device, which specifically includes: the first operator network queries an EIR (Equipment Identity Register, equipment identity register) according to the IMEI, where the EIR includes one or more databases, and the database or databases are used to store IMEI information (a whitelist, a graylist, and a blacklist) of the UE; queries, according to the IMEI, whether the IMEI is on the blacklist; and if the IMEI is on the blacklist, a device corresponding to the IMEI is a stolen device. If the UE is a stolen device, a verification result sent to the remote management platform in step 209 indicates that the verification fails, where the verification result carries an identity indicating that the device is an unauthorized device, so as to indicate that the verification fails, and may further indicate locking of the eUICC; if the user equipment is not a stolen device, the verification result sent to the remote management platform indicates that the verification succeeds.
(3) Verify whether the eUICC in the UE is a cloned card, which specifically includes: determining whether an IMEI corresponding to the ICCID stored by the first operator network is the same as an IMEI corresponding to the ICCID carried in the verification request message; and if yes, the eUICC card of the UE is normal, and a verification result sent to the remote management platform in step 209 indicates that the verification succeeds; if no, the verification result sent to the remote management platform in step 209 indicates that the verification fails, and the verification result may further carry an instruction for locking a device, so as to indicate that the verification fails, and indicate locking of the eUICC. An IMEI of each UE is corresponding to a unique ICCID, the ICCID is the unique identification number of an eUICC, and there is an unchangeable one-to-one correspondence between an ICCID and an IMEI. Therefore, the correspondence between an ICCID and an IMEI may be analyzed to learn whether the eUICC in the UE is a cloned card.

209. The first operator network returns a verification result to the remote management platform; and if the verification succeeds, subsequent step 210 is performed; if the verification fails, step 214 is performed.

210. The remote management platform acquires the subscription information of the second operator network and related configuration information of the second operator network.

In this embodiment, step 210 may be an interaction process between the remote management platform and the second operator network, which specifically includes: the remote management platform sends the second request message to the second operator network, where the second request message carries the ICCID, and further, the second request message may further carry the IMEI and/or the IMSI; the second operator network queries, according to the ICCID carried in the second request message, whether the UE has subscribed to the second operator network, and if yes, sends the subscription information of the second operator network and the related configuration information of the second operator network to the remote management platform, that is, the remote management platform acquires the subscription information of the second operator network and the related configuration information of the second operator network. The related configuration information may include an APN (Access Point Name, access point name), an SMS (Short Message Service, short message service) center number, and the like. The APN is a parameter that must be set when a mobile phone is used to access the Internet, which determines a manner in which the mobile phone accesses the Internet, for example, CMNET (China mobile Internet, China mobile Internet). The SMS is a store-and-forward service, where a short message is forwarded by an SMS center, and if a recipient is in a disconnected state (a telephone may be powered off), the message is sent when the recipient is connected.

If the user is in another country, the user may not know how to set key information such as the APN and the SMS in the terminal device. If the APN and the SMS are not set, the terminal device cannot access the Internet or receive and send an short message. In the process of a handover between operator networks, if set parameters of the APN and the SMS center number may be acquired, the user does not need to set the APN and the SMS, which brings great convenience to the user.

After the second operator network receives the second request message sent by the remote management platform, the second operator network may store the ICCID carried in the second request message, and further, may store the IMEI and/or the IMSI if the second request message carries the IMEI and/or the IMSI. An objective of storing the ICCID and the IMEI and/or the IMSI by the second operator network is to make preparation for a next handover between operator networks, where when the UE performs a handover between operator networks next time, the second operator network also needs to perform verification on the UE according to the stored ICCID and the IMEI and/or the IMSI.

211. The remote management platform sends an indication message to the eUICC through the UE, where the indication message carries the acquired subscription information of the second operator network and related configuration information of the second operator network.

Optionally, the indication message may indicate that the eUICC verification succeeds, and/or instruct the eUICC to perform a handover.

212. When receiving the indication message, the eUICC parses received related configuration information, and sends parsed related configuration information of the second operator network to the UE.

213. The UE performs configuration according to the parsed related configuration information of the second operator network, so that the UE performs a handover to the second operator network.

Specifically, the UE sends the received subscription information of the second operator network and the related configuration information of the second operator network to the eUICC; the eUICC stores the received subscription information of the second operator network, parses the received related configuration information of the second operator network, and sends a parsing result to the UE; and the UE receives the parsed related configuration information, and configures the UE itself according to the parsed related configuration information, so that the UE performs a handover to the second operator network, and performs an network activity, such as Internet access and short message reception, by using the second operator network.

Further, the eUICC breaks the data path to the remote management platform by using the UE, and enables, by using the second operator network, the UE to establish a new data path between the UE and the remote management platform. Specifically, this step may be that the eUICC sends, to the UE, a request message for breaking the data path; and when receiving the request message for breaking the data path, the UE breaks the data path between the UE and the remote management platform, and enables, by using the second operator network, the UE to establish the new data path between the UE and the remote management platform. A person skilled in the art may learn that a specific process of enabling, by using the second operator network, the UE to establish the new data path between the UE and the remote management platform is disclosed in the prior art, which is not described any further in the present invention.

Further, the eUICC may further send an acknowledgement message to the remote management platform by using the UE, where the acknowledgement message is used to acknowledge whether the second operator network serves the UE; and the remote management platform learns that the acknowledgement message is sent over the new data path connection established between the UE and the remote management platform, and may acknowledge that the subscription information of the second operator network is used, and consider that the second operator network serves the UE.

Further, the UE makes that the subscription information of the first operator network is in an idle state (Idle state).

214. The verification result received by the remote management platform indicates that the verification fails, and the remote management platform sends, by using the UE, an indication message to the eUICC according to content carried in the verification result, so that the eUICC does not perform a handover between operator networks for the UE.

Specifically, the eUICC receives the indication message; and when the indication message indicates that the eUICC verification fails, the eUICC may send no handover instruction to the UE, or the eUICC may instruct the UE not to perform a handover to the second operator network.

It should be noted that the indication message in this embodiment may, in actual use, be a message such as a report message, an inform message, or an indicate message.

Optionally, if the unauthorized user uses a stolen device and/or a cloned eUICC, the remote management platform may instruct the eUICC to set the eUICC to a locked state.

Optionally, if the unauthorized user uses a device in arrears, the eUICC may continue to use the subscription information of the first operator network. Further, the eUICC may prompt for arrears.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE. Further, in this embodiment, the process in which the UE performs a handover between operator networks is described by assuming that the eUICC stores no subscription information of the second operator network, and security for the UE and the user of the UE is improved by security control of the remote management platform.

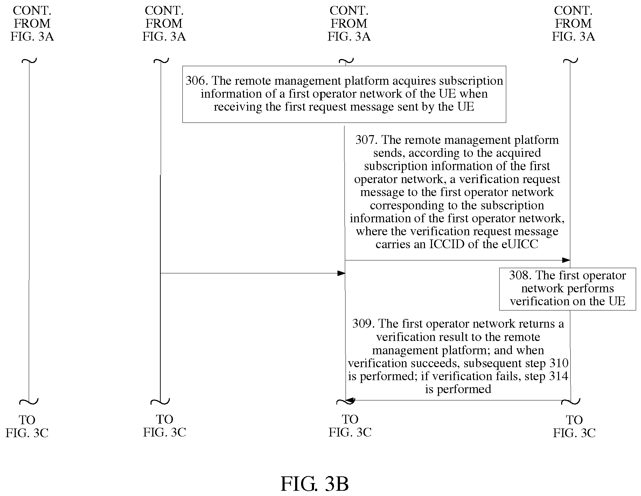

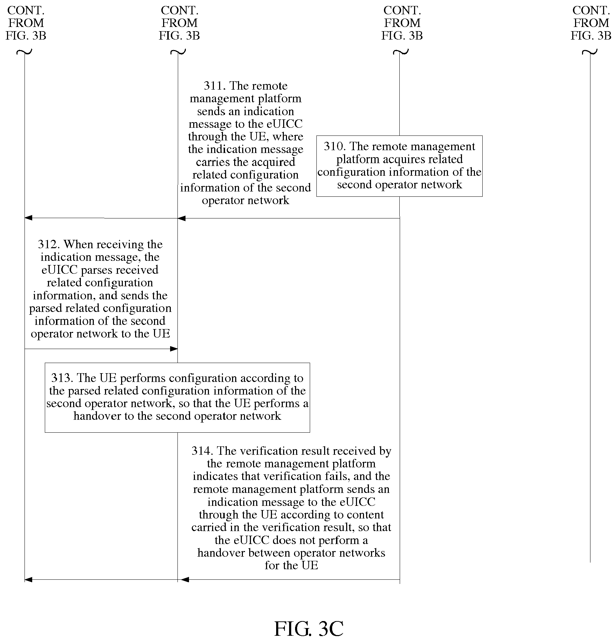

FIG. 3 is a flowchart of a method for a handover between operator networks according to an embodiment of the present invention. Interaction bodies in this embodiment are the same as those in the embodiment shown in FIG. 2, which are not further described in this embodiment. In order to describe a specific procedure in detail, this embodiment is described by assuming a scenario in which a UE previously performed a handover between operator networks and an eUICC in the UE stores subscription information of a second operator network. Referring to FIG. 3, this embodiment specifically includes the following:
301. The UE detects whether a preset handover condition is met.

In this embodiment, the preset handover condition may include at least any one of the following: the UE is out of coverage of the first operator network, a geographic location of the UE changes, a clock time of the UE is within a preset time segment, or a preset event occurs on the UE.
(1) The geographic location of the UE changes. In order to allow the UE to use different operator networks in different geographical areas according to an actual requirement, a change of the geographic location may be used as the preset handover condition for triggering a determining process in step 302. Specifically, when the UE detects that its geographic location changes, for example, detects that the UE roams from one geographical area to another, the UE meets the preset handover condition, and triggers the determining process in step 302. Specifically, the UE may learn its geographic location according to cell broadcast or a GPS (Global Positioning System, global positioning system), and determine, according to its current geographic location, whether the geographic location changes; or may learn, in another manner, whether the geographic location changes. The present invention is not limited thereto.
(2) The clock time of the UE is within the preset time segment. In order to allow the UE to use different operator networks within different time segments, that the clock time is within the preset time segment may be used as the preset handover condition for triggering the determining process in step 302. Specifically, the preset time segment and an operator network that serves the UE within the preset time segment may be set for the UE; the UE detects whether the clock time of the UE is within the preset time segment; and when the clock time of the UE is within the preset time segment, the UE meets the preset handover condition, and triggers the determining process in step 302. There may be one or more preset time segments, which is not specifically limited in the present invention. For example, an operator network that currently serves the UE is China Unicom, a preset time segment is 17:00-20:00, and an operator network that provides a service within the preset time segment is China Mobile; accordingly, China Unicom serves the UE beyond 17:00-20:00, and when a clock time is within the preset time segment, that is, 17:00-20:00, the UE meets the preset handover condition and triggers step 302 and the subsequent process, so that China Mobile serves the UE within 17:00-20:00. That the clock time is within the preset time segment may be understood as that the clock time is within a preset time, where the preset time may be one time point within the preset time segment, for example, may be any one time within the preset time segment 17:00-20:00.
(3) The preset event occurs on the UE. The preset event is used as the preset handover condition for triggering step 302 and the subsequent process, so that after the preset event occurs on the UE, an operator network different from that before the preset event occurs provides a service. For example, the preset event is Internet access. If a first operator network that serves the UE is China Mobile, when an Internet access event occurs, step 302 and the subsequent process are triggered, so that the UE performs a handover to a second operator network (assuming that it is China Telecom), and that China Telecom always provides a service during an entire process of Internet access.
(4) The UE is out of coverage of the first operator network (that is, a current network). When the UE is out of coverage of the current network, the UE may directly perform a handover to another operator network.

Specifically, when the UE detects that signal strength of the first operator network is smaller than a preset threshold, it may be considered that the UE is out of the coverage of the first operator network, where signal strength detection is disclosed in the prior art, and is not described any further in the present invention.

Optionally, before step 301, the method may further include: setting the preset handover condition of the UE. The preset handover condition may be set and adjusted by a user according to a use requirement, which is not specifically limited in the present invention. In addition, the UE may provide an interface for setting the preset handover condition, so that the user sets the preset handover condition; in the interface, a step of prompting may be provided for the user, so that the user may set the preset handover condition according to the step of prompting.

302. When learning through detection that the UE meets the preset handover condition, the UE determines whether an eUICC stores subscription information of a second operator network; and if yes, performs step 303.

When learning through detection that the UE meets the preset handover condition, the user equipment UE may learn that it needs to perform a handover from the first operator network to the second operator network.

The subscription information of the second operator network is subscription information between the UE and the second operator network, and is a basis for determining whether the UE has subscribed to the second operator network. Specifically, the subscription information may be a telephone number of the UE. By means of determining whether the eUICC of the UE stores the subscription information of the second operator network, it may be determined whether the UE performs a handover to the second operator network for the first time. If the eUICC stores the subscription information of the second operator network, the UE previously performed a handover to the second operator network; if the eUICC of the UE stores no subscription information of the second operator network, the UE performs a handover to the second operator network for the first time.

A person skilled in the art may learn that if it is detected that the UE does not meet the preset handover condition, the first operator network may continue to serve the UE.

A difference between this embodiment and the embodiment shown in FIG. 2 lies in that, this embodiment is described by assuming a scenario in which the UE previously performed a handover between operator networks, and the eUICC in the UE stores the subscription information of the second operator network.

303. The UE sends a request message for performing a handover to the second operator network to the eUICC, so that the eUICC requests a remote management platform of the second operator network to perform a handover to the second operator network.

Because the eUICC in the user equipment stores the subscription information of the second operator network, the UE may acquire the subscription information of the second operator network directly from the eUICC.

Further, the eUICC sends, to the UE, a request message for establishing a data path; when the UE receives the request message for establishing a data path, the UE establishes a data path to the remote management platform according to information about the remote management platform. That the eUICC sends, to the UE, a request message for establishing a data path may be understood as that the eUICC initiates, to the UE by using the first operator network or an MVNO (Mobile Virtual Network Operator, mobile virtual network operator), the request message for establishing a data path, where the request message for establishing a data path is used to request the UE to establish a data path between the UE and the remote management platform. The MVNO is a frequency band that is specially open to the UE, and is used to transmit subscription information of an operator network.

The information about the remote management platform is stored in the eUICC. A person skilled in the art may learn that the information about the remote management platform may include an address of the remote management platform, and the like.

It should be noted that the eUICC establishes a data path to the remote management platform by using the UE; although the UE has a forwarding function in between, it is allowed that the UE does not parse content exchanged between the eUICC and the remote management platform. Therefore, logically, the eUICC and the remote management platform may be directly connected.

Subsequent signaling interactions between the UE and the remote management platform in this embodiment are implemented by using the data path established by the UE to the remote management platform.

304. The eUICC sends a first request message to the UE, where the first request message is used to request a handover to the second operator network, and the first request message carries an ICCID of the eUICC.

This embodiment of the present invention is described merely by assuming that the identity of the eUICC is the ICCID. Preferably, the identity of the eUICC may also be an IMSI (International Mobile Subscriber Identity, international mobile subscriber identity), an IMEI (International Mobile Equipment Identity, international mobile equipment identity), or the like. Optionally, the first request message carries the ICCID, and may further carry another identity of the eUICC, such as an IMSI and/or an IMEI.

305. The UE sends the first request message to the remote management platform, where the first request message carries the ICCID of the eUICC.

306. The remote management platform acquires subscription information of the first operator network of the UE when receiving the first request message sent by the UE.

It should be noted that the UE may store subscription information of a plurality of first operator networks, where the subscription information of the plurality of first operator networks may include subscription information of an operator network that currently serves the UE and subscription information of another operator network that previously served the UE. Therefore, optionally, when receiving the first request message sent by the UE, the remote management platform may acquire one or more subscription information of first operator network of the UE from the remote management platform, that is, may acquire subscription information of any one first operator network of the UE from the remote management platform, acquire subscription information of all first operator networks of the UE from the remote management platform, or acquire subscription information of a plurality of first operator networks of the UE from the remote management platform.

Specifically, acquiring the subscription information of the first operator network of the UE includes but is not limited to any one of the following methods: (1) Determine, according to the ICCID of the eUICC, whether the remote management platform prestores the subscription information of the first operator network of the UE; and if yes, the remote management platform acquires the locally-stored subscription information of the first operator network of the UE; if no, the remote management platform sends a message for acquiring subscription information of an operator network to the UE, and the UE acquires the subscription information of the first operator network from the eUICC of the UE, so that the UE returns the subscription information of the first operator network that is currently stored by the UE. (2) When the second request message sent by the UE carries the subscription information of the first operator network of the UE, acquire the subscription information of the first operator network in the second request message.

307. The remote management platform sends, according to the acquired subscription information of the first operator network, a verification request message to the first operator network corresponding to the subscription information of the first operator network, where the verification request message carries the ICCID of the eUICC.

The verification request message carries the ICCID. Further, the verification request message may further carry the IMSI and/or the IMEI.

It should be noted that, the subscription information of the first operator network stored on the UE may include the subscription information of an operator network that currently serves the UE and subscription information of another operator network that previously served the UE; therefore, the verification request message may be sent to one or more objects. This embodiment is described merely by assuming that the sending object is one operator network.

308. When receiving the verification request message sent by the remote management platform, the first operator network performs verification on the eUICC according to the ICCID carried in the verification request message.

Verification performed on the UE is to verify, according to the ICCID carried in the verification request message, whether the UE is an authorized device, which may specifically include: when the verification request message carries only the ICCID of the eUICC, the first operator network may acquire, by using the ICCID, an IMEI corresponding to the ICCID, and verify, according to the IMEI and the ICCID, whether the UE is a device in arrears and/or whether the UE is a stolen device; and
further, when the verification request message carries the ICCID and the IMEI, verify, according to the IMEI and the ICCID, whether the UE is a device in arrears, and/or whether the UE is a stolen device, and/or whether an eUICC card in the UE is a cloned card.

Verification performed on the UE may specifically include at least one of the following:
(1) Verify whether the UE is a device in arrears, which may specifically include: the first operator network acquires an IMSI (International Mobile Subscriber Identity, international mobile subscriber identity) of a user according to the ICCID, queries a charging server according to the IMSI, and determines, according to user charging information in the charging server, whether a user corresponding to the IMSI is in arrears; and if it is learned, by query, that the user is in arrears, a verification result sent to the remote management platform in step 309 indicates that the verification fails, where the verification result includes non-payment information, so as to indicate that the UE is in arrears; if it is learned, by query, that the UE is not in arrears, the verification result sent to the remote management platform indicates that the verification succeeds.
(2) Verify whether the UE is a stolen device, which specifically includes: the first operator network queries an EIR (Equipment Identity Register, equipment identity register) according to the IMEI, where the EIR includes one or more databases, and the database or databases are used to store IMEI information (a whitelist, a graylist, and a blacklist) of the UE; queries, according to the IMEI, whether the IMEI is on the blacklist; and if the IMEI is on the blacklist, a device corresponding to the IMEI is a stolen device. If the UE is a stolen device, a verification result sent to the remote management platform in step 309 indicates that the verification fails, where the verification result carries an identity indicating that the device is an unauthorized device, so as to indicate that the verification fails, and may further indicate locking of the eUICC; if the user equipment is not a stolen device, the verification result sent to the remote management platform indicates that the verification succeeds.
(3) Verify whether the eUICC in the UE is a cloned card, which specifically includes: determining whether an IMEI corresponding to the ICCID stored by the first operator network is the same as an IMEI corresponding to the ICCID carried in the verification request message; and if yes, the eUICC card of the UE is normal, and a verification result sent to the remote management platform in step 309 indicates that the verification succeeds; if no, the verification result sent to the remote management platform in step 309 indicates that the verification fails, and the verification result may further carry an instruction for locking a device, so as to indicate that the verification fails, and indicate locking of the eUICC. An IMEI of each UE is corresponding to a unique ICCID, the ICCID is the unique identification number of an eUICC, and there is an unchangeable one-to-one correspondence between an ICCID and an IMEI. Therefore, the correspondence between an ICCID and an IMEI may be analyzed to learn whether the eUICC in the UE is a cloned card.

309. The first operator network returns a verification result to the remote management platform; and if the verification succeeds, subsequent step 310 is performed; if the verification fails, step 314 is performed.

310. The remote management platform acquires related configuration information of the second operator network.

When receiving the first request message, the remote management platform may learn that the UE stores the subscription information of the second operator network; therefore, in step 310, only the related configuration information of the second operator network needs to be acquired.

In this embodiment, step 310 may be an interaction process between the remote management platform and the second operator network, which specifically includes: the remote management platform sends the first request message to the second operator network, where the first request message carries the ICCID, and further, the first request message may further carry the IMEI and/or the IMSI; the second operator network queries, according to the ICCID carried in the second request message, whether the UE has subscribed to the second operator network, and if yes, sends the related configuration information of the second operator network to the remote management platform, that is, the remote management platform acquires the related configuration information of the second operator network. The related configuration information may include an APN (Access Point Name, access point name), an SMS (Short Messaging Service, short message service) center number, and the like.

311. The remote management platform sends an indication message to the eUICC through the UE, where the indication message carries the acquired related configuration information of the second operator network.

Optionally, the indication message may indicate that the eUICC verification succeeds, and/or instruct the eUICC to perform a handover.

312. When receiving the indication message, the eUICC parses received related configuration information, and sends parsed related configuration information of the second operator network to the UE.

313. The UE performs configuration according to the parsed related configuration information of the second operator network, so that the UE performs a handover to the second operator network.

In this embodiment, the eUICC may store both the subscription information of the second operator network and the related configuration information of the second operator network; therefore, steps 310 to 313 may be replaced with the following steps: when the verification succeeds, the remote management platform sends an indication message to the eUICC through the UE, where the indication message indicates that the verification succeeds and/or instructs the eUICC to perform a handover, and carries no related configuration information of the second operator network; accordingly, when the eUICC receives the indication message, the eUICC parses the locally-stored related configuration information of the second operator network, and sends parsed related configuration information of the second operator network to the UE, so that the UE performs configuration according to the related configuration information, thereby performing a handover to the second operator network.

314. The verification result received by the remote management platform indicates that the verification fails, and the remote management platform sends, by using the UE, an indication message to the eUICC according to content carried in the verification result, so that the eUICC does not perform a handover between operator networks for the UE.

In the embodiment shown in FIG. 2 and that shown in FIG. 3, the first operator network and the second operator network use a same remote management platform, that is, the remote management platforms in these two embodiments are the remote management platform of the second operator network, and are used to manage subscription information for the first operator network and the second operator network.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform handover between operator networks, thereby improving security for the UE and the user of the UE. Further, in this embodiment, the process in which the UE performs a handover between operator networks is described by assuming that the eUICC stores subscription information of the second operator network, and security for the UE and the user of the UE is improved by security control of the remote management platform.

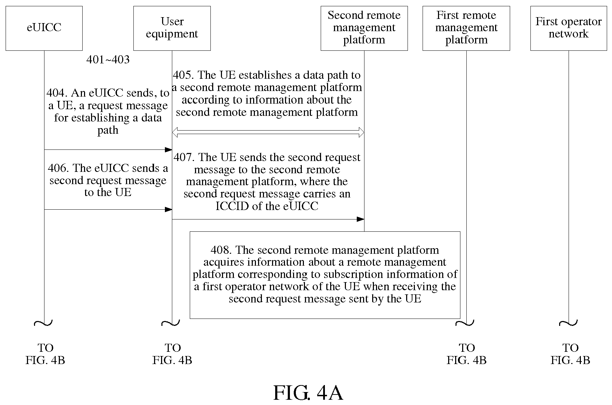

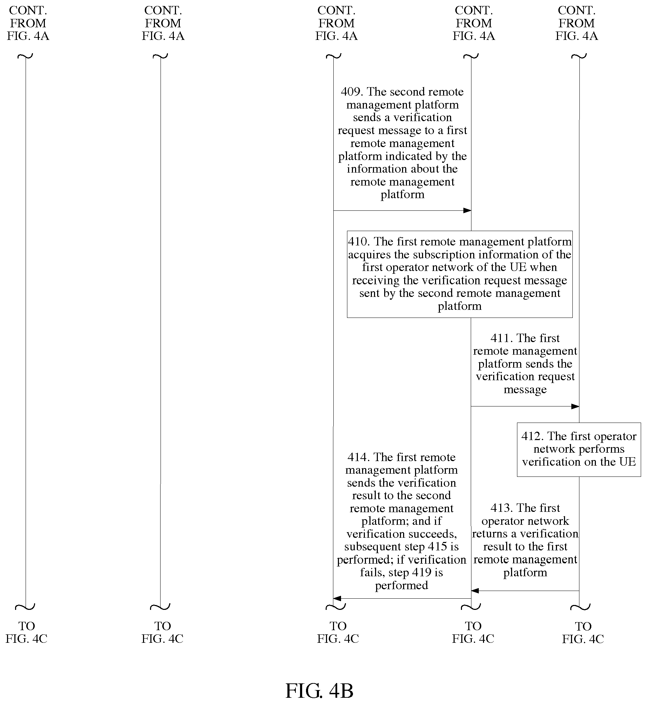

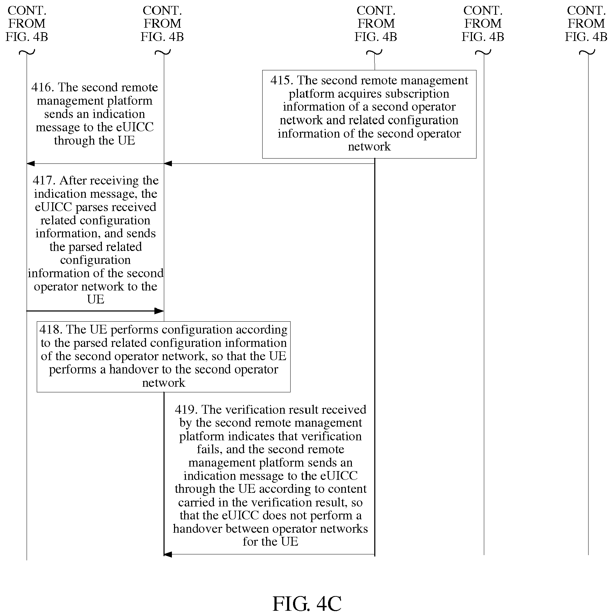

FIG. 4 is a flowchart of a method for a handover between operator networks according to an embodiment of the present invention. In this embodiment, it is assumed that there is a plurality of remote management platforms in a network architecture, and the remote management platforms are interconnected and provide services for different operator networks. For ease of description, a remote management platform that currently serves a UE is referred to as a first remote management platform, and another remote management platform is referred to as a second remote management platform. This embodiment is described merely by assuming a scenario in which the UE did not perform a handover between operator networks and the eUICC in the UE does not store the subscription information of the second operator network. Referring to FIG. 4, this embodiment may specifically include the following:
401. The UE detects whether a preset handover condition is met.

In this embodiment, the preset handover condition may include at least any one of the following: the UE is out of coverage of the first operator network, a geographic location of the UE changes, a clock time of the UE is within a preset time segment, or a preset event occurs on the UE.
(1) The geographic location of the UE changes. In order to allow the UE to use different operator networks in different geographical areas according to an actual requirement, a change of the geographic location may be used as the preset handover condition for triggering a determining process in step 402. Specifically, when the UE detects that its geographic location changes, for example, detects that the UE roams from one geographical area to another, the UE meets the preset handover condition, and triggers the determining process in step 402. Specifically, the UE may learn its geographic location according to cell broadcast or a GPS (Global Positioning System, global positioning system), and determine, according to its current geographic location, whether the geographic location changes; or may learn, in another manner, whether the geographic location changes. The present invention is not limited thereto.
(2) The clock time of the UE is within the preset time segment. In order to allow the UE to use different operator networks within different time segments, that the clock time is within the preset time segment may be used as the preset handover condition for triggering the determining process in step 402. Specifically, the preset time segment and an operator network that serves the UE within the preset time segment may be set for the UE; the UE detects whether the clock time of the UE is within the preset time segment; and when the clock time of the UE is within the preset time segment, the UE meets the preset handover condition, and triggers the determining process in step 402. There may be one or more preset time segments, which is not specifically limited in the present invention. For example, an operator network that currently serves the UE is China Unicom, a preset time segment is 17:00-20:00, and an operator network that provides a service within the preset time segment is China Mobile; accordingly, China Unicom serves the UE beyond 17:00-20:00, and when a clock time is within the preset time segment, that is, 17:00-20:00, the UE meets the preset handover condition and triggers step 402 and the subsequent process, so that China Mobile serves the UE within 17:00-20:00. That the clock time is within the preset time segment may be understood as that the clock time is within a preset time, where the preset time may be one time point within the preset time segment, for example, may be any one time within the preset time segment 17:00-20:00.
(3) The preset event occurs on the UE. The preset event is used as the preset handover condition for triggering step 402 and the subsequent process, so that after the preset event occurs on the UE, an operator network different from that before the preset event occurs provides a service. For example, the preset event is Internet access. If a first operator network that serves the UE is China Mobile, when an Internet access event occurs, step 402 and the subsequent process are triggered, so that the UE performs a handover to a second operator network (assuming that it is China Telecom), and that China Telecom always provides a service during an entire process of Internet access.
(4) The UE is out of coverage of the first operator network (that is, a current network). When the UE is out of coverage of the current network, the UE may directly perform a handover to another operator network.

Specifically, when the UE detects that signal strength of the first operator network is smaller than a preset threshold, it may be considered that the UE is out of the coverage of the first operator network, where signal strength detection is disclosed in the prior art, and is not described any further in the present invention.

Optionally, before step 401, the method may further include: setting the preset handover condition of the UE. The preset handover condition may be set and adjusted by a user according to a use requirement, which is not specifically limited in the present invention. In addition, the UE may provide an interface for setting the preset handover condition, so that the user sets the preset handover condition; in the interface, a step of prompting may be provided for the user, so that the user may set the preset handover condition according to the step of prompting.

402. When learning through detection, that the UE meets the preset handover condition, the UE determines whether an eUICC stores subscription information of a second operator network; if no, performs step 403.

When learning through detection that the UE meets the preset handover condition, the user equipment UE may learn that it needs to perform a handover from the first operator network to the second operator network.

The subscription information of the second operator network is subscription information between the UE and the second operator network, and is a basis for determining whether the UE has subscribed to the second operator network. Specifically, the subscription information may be a telephone number of the UE. By means of determining whether the eUICC of the UE stores the subscription information of the second operator network, it may be determined whether the UE performs a handover to the second operator network for the first time. If the eUICC stores the subscription information of the second operator network, the UE previously performed a handover to the second operator network; if the eUICC of the UE stores no subscription information of the second operator network, the UE performs a handover to the second operator network for the first time.

A person skilled in the art may learn that if it is detected that the UE does not meet the preset handover condition, the first operator network may continue to serve the UE.

This embodiment is described by assuming a scenario in which the UE did not perform handover between operator networks and the eUICC in the UE does not store the subscription information of the second operator network.

403. The UE sends a request message for acquiring the subscription information of the second operator network to the eUICC, so that the eUICC requests acquisition of the subscription information of the second operator network from a remote management platform of the second operator network.

Steps 401 to 403 are similar to steps 201 to 203, and are not described any further in this embodiment.

404. The eUICC sends, to the UE, a request message for establishing a data path.

That the eUICC sends, to the UE, a request message for establishing a data path may be understood as that the eUICC initiates, to the UE by using the first operator network or an MVNO (Mobile Virtual Network Operator, mobile virtual network operator), the request message for establishing a data path, where the request message for establishing a data path is used to request the UE to establish a data path between the UE and the second remote management platform. The MVNO is a frequency band that is specially open to the UE, and is used to transmit subscription information of an operator network.

405. The UE establishes a data path to a second remote management platform according to information about the second remote management platform.

The information about the second remote management platform may be stored in the eUICC. A person skilled in the art may learn that the information about the remote management platform may include an address of the remote management platform, and the like.

It should be noted that the eUICC establishes a data path to the second remote management platform by using the UE; although the UE has a forwarding function in between, it is allowed that the UE does not parse content exchanged between the eUICC and the second remote management platform. Therefore, logically, the eUICC and the second remote management platform may be directly connected.

Subsequent signaling interactions between the UE and the second remote management platform in this embodiment are implemented by using the data path established by the UE to the second remote management platform.

A person skilled in the art may learn that the eUICC may store information about a plurality of remote management platforms, and the UE may acquire information about a remote management platform from the eUICC, so as to establish a data path to the remote management platform.

In addition, operators may each have their own remote management platforms. For example, China Mobile uses a first remote management platform, and China Unicom uses a second remote management platform.

406. The eUICC sends a second request message to the UE, where the second request message is used to request acquisition of the subscription information of the second operator network, and the second request message carries an ICCID of the eUICC.

It should be noted that the eUICC sends the second request message to the UE, and the UE sends the request to the second remote management platform; in essence, this process is an interaction between the eUICC and the second remote management platform.

407. The UE sends the second request message to the second remote management platform, where the second request message carries the ICCID of the eUICC.

Optionally, the second request message carries the ICCID, and may further carry another identity of the eUICC, such as an IMSI and/or an IMEI. This embodiment of the present invention is described merely by assuming that the identity of the eUICC is the ICCID. Preferably, the identity of the eUICC may also be an IMSI (International Mobile Subscriber Identity, international mobile subscriber identity), an IMEI (International Mobile Equipment Identity, international mobile equipment identity), or the like.

Steps 406 to 407 are a process in which the eUICC requests acquisition of the subscription information of the second operator network from the second remote management platform of the second operator network.

408. The second remote management platform acquires information about a remote management platform corresponding to subscription information of a first operator network of the UE when receiving the second request message sent by the UE.

A person skilled in the art may learn that subscription information of an operator network includes information about a remote management platform of the operator network, or a person skilled in the art may learn that the remote management platforms are interconnected and each of the remote management platforms may maintain a relationship table indicating a correspondence between a remote management platform and each operator; accordingly, the operator network may acquire, by using the subscription information, the information about the remote management platform corresponding to the subscription information. This process is not specifically limited in this embodiment.

In a case in which the subscription information of the operator network includes the information about the remote management platform of the operator network, in step 408, the acquiring information about a remote management platform corresponding to subscription information of a first operator network of the UE may be specifically divided into the following two stages (1) and (2):
(1) Acquire the subscription information of the first operator network of the UE.
   Specifically, acquiring the subscription information of the first operator network of the UE includes but is not limited to any one of the following methods: (1) Determine, according to the ICCID of the eUICC, whether the second remote management platform prestores the subscription information of the first operator network of the UE; and if yes, the second remote management platform acquires the locally-stored subscription information of the first operator network of the UE; if no, the second remote management platform sends a message for acquiring subscription information of an operator network to the UE, and the UE acquires the subscription information of the first operator network from the eUICC of the UE, so that the UE returns the subscription information of the first operator network that is currently stored by the UE. (2) When the second request message sent by the UE carries the subscription information of the first operator network of the UE, acquire the subscription information of the first operator network in the second request message.
   It should be noted that the UE may store subscription information of a plurality of first operator networks, where the subscription information of the plurality of first operator networks may include subscription information of an operator network that currently serves the UE and subscription information of another operator network that previously served the UE. Therefore, optionally, when receiving the second request message sent by the UE, the second remote management platform may acquire one or more subscription information of first operator network of the UE that is stored by the remote management platform, that is, may acquire subscription information of any one first operator network of the UE that is stored by the second remote management platform, acquire subscription information of all first operator networks of the UE that is stored by the second remote management platform, or acquire subscription information of a plurality of first operator networks of the UE that is stored by the second remote management platform.
(2) Acquire the information about the remote management platform corresponding to the subscription information of the first operator network of the UE. Specifically, the information about the first remote management platform corresponding to the subscription information is extracted from the acquired subscription information of the first operator network.

In a case in which the operator network acquires, by using the subscription information, the information about the remote management platform corresponding to the subscription information, step 408 may include any one of the following methods:
(1) Determine whether the second request message carries the information about the first remote management platform corresponding to the subscription information of the first operator network; and if yes, extract the information about the first remote management platform, which is corresponding to the subscription information of the first operator network and is carried in the second request message; if no, acquire, from the UE, the information about the first remote management platform, which is corresponding to the subscription information of the first operator network and is currently stored by the UE.
(2) Without determining content carried in the second request message, directly acquire, from the UE, the information about the first remote management platform, which is corresponding to the subscription information of the first operator network and is currently stored by the UE.
(3) Extract the information about the remote management platform, which is carried in the second request message, and use the extracted information about the remote management platform as the information about the first remote management platform corresponding to the subscription information about the first operator network.

409. The second remote management platform sends, according to the information about the remote management platform corresponding to the subscription information of the first operator network, a verification request message to a first remote management platform indicated by the information about the remote management platform, where the verification request message carries the ICCID of the eUICC.

The verification request message carries the ICCID. Further, the verification request message may further carry the IMSI and/or the IMEI.

It should be noted that, for the UE, there may be one or more operator networks that serve the UE, where each operator network is corresponding to one remote management platform; therefore, the eUICC may store information about one or more remote management platforms. This embodiment is described merely by assuming that one operator network serves the UE; in a scenario in which a plurality of operator networks serves the UE, a verification request message may be sent to the plurality of remote management platforms or a verification request message is sent to any one of the plurality of remote management platforms; that is, the verification request message may be sent to one or more of the plurality of remote management platforms.

410. The first remote management platform acquires the subscription information of the first operator network of the UE when receiving the verification request message sent by the second remote management platform.

Specifically, acquiring the subscription information of the first operator network of the UE includes but is not limited to any one of the following methods: (1) Determine, according to the ICCID of the eUICC, whether the first remote management platform prestores the subscription information of the first operator network of the UE; and if yes, the first remote management platform acquires the locally-stored subscription information of the first operator network of the UE; if no, the first remote management platform sends a message for acquiring subscription information of an operator network to the UE, and the UE acquires the subscription information of the first operator network from the eUICC of the UE, so that the UE returns the subscription information of the first operator network that is currently stored by the UE. (2) When the second request message sent by the UE carries the subscription information of the first operator network of the UE, acquire the subscription information of the first operator network in the second request message.

411. The first remote management platform sends, according to the acquired subscription information of the first operator network, a verification request message to the first operator network corresponding to the subscription information of the first operator network, where the verification request message carries the ICCID of the eUICC.

It should be noted that steps 407 to 411 may be further replaced with the following steps: the UE sends the second request message to the second remote management platform, where the second request message carries the currently stored subscription information of the first operator network and information about the first remote management platform corresponding to the subscription information of the first operator network; the second remote management platform sends the verification request message to the corresponding first remote management platform according to the information about the first remote management platform carried in the second request message, where the verification request message carries the subscription information of the first operator network; and when receiving the verification request message, the first remote management platform sends the verification request message to the corresponding first operator network according to the subscription information of the first operator network carried in the verification request message.

412. When receiving the verification request message sent by the first remote management platform, the first operator network performs, according to the ICCID carried in the verification request message, verification on the eUICC disposed in the UE.

Verification performed on the UE is to verify, according to the ICCID carried in the verification request message, whether the UE is an authorized device, which may specifically include: when the verification request message carries only the ICCID of the eUICC, the first operator network may acquire, by using the ICCID, an IMEI corresponding to the ICCID, and verify, according to the IMEI and the ICCID, whether the UE is a device in arrears and/or whether the UE is a stolen device; and
further, when the verification request message carries the ICCID and the IMEI, verify, according to the IMEI and the ICCID, whether the UE is a device in arrears, and/or whether the UE is a stolen device, and/or whether an eUICC card in the UE is a cloned card.

Verification performed on the UE may specifically include at least one of the following:
(1) Verify whether the UE is a device in arrears, which may specifically include: the first operator network acquires an IMSI (International Mobile Subscriber Identity, international mobile subscriber identity) of a user according to the ICCID, queries a charging server according to the IMSI, and determines, according to user charging information in the charging server, whether a user corresponding to the IMSI is in arrears; and if it is learned, by query, that the user is in arrears, a verification result sent to the remote management platform in step 413 indicates that the verification fails, where the verification result may further include non-payment information, so as to indicate that the UE is in arrears; if it is learned, by query, that the UE is not in arrears, the verification result sent to the remote management platform indicates that the verification succeeds.
(2) Verify whether the UE is a stolen device, which specifically includes: the first operator network queries an EIR (Equipment Identity Register, equipment identity register) according to the IMEI, where the EIR includes one or more databases, and the database or databases are used to store IMEI information (a whitelist, a graylist, and a blacklist) of the UE; queries, according to the IMEI, whether the IMEI is on the blacklist; and if the IMEI is on the blacklist, a device corresponding to the IMEI is a stolen device. If the UE is a stolen device, a verification result sent to the remote management platform in step 413 indicates that the verification fails, where the verification result carries an identity indicating that the device is an unauthorized device, so as to indicate that the verification fails, and may further indicate locking of the eUICC; if the user equipment is not a stolen device, the verification result sent to the remote management platform indicates that the verification succeeds.
(3) Verify whether the eUICC in the UE is a cloned card, which specifically includes: determining whether an IMEI corresponding to the ICCID stored by the first operator network is the same as an IMEI corresponding to the ICCID carried in the verification request message; and if yes, the eUICC card of the UE is normal, and a verification result sent to the remote management platform in step 413 indicates that the verification succeeds; if no, the verification result sent to the remote management platform in step 413 indicates that the verification fails, and the verification result may further carry an instruction for locking a device, so as to indicate that the verification fails, and indicate locking of the eUICC. An IMEI of each UE is corresponding to a unique ICCID, the ICCID is the unique identification number of an eUICC, and there is an unchangeable one-to-one correspondence between an ICCID and an IMEI. Therefore, the correspondence between an ICCID and an IMEI may be analyzed to learn whether the eUICC in the UE is a cloned card.

413. The first operator network returns a verification result to the first remote management platform.

414. The first remote management platform sends the verification result to the second remote management platform; and if the verification succeeds, subsequent step 415 is performed; if the verification fails, step 419 is performed.

415. The second remote management platform acquires the subscription information of the second operator network and related configuration information of the second operator network.

In this embodiment, step 415 may be an interaction process between the second remote management platform and the second operator network, which specifically includes: the second remote management platform sends the second request message to the second operator network, where the second request message carries the ICCID, and further, the second request message may further carry the IMEI and/or the IMSI; the second operator network queries, according to the ICCID carried in the second request message, whether the UE has subscribed to the second operator network, and if yes, sends the subscription information of the second operator network and the related configuration information of the second operator network to the second remote management platform, that is, the second remote management platform acquires the subscription information of the second operator network and the related configuration information of the second operator network.

After the second operator network receives the second request message sent by the second remote management platform, the second operator network may store the ICCID carried in the second request message, and further, may store the IMEI and/or the IMSI if the second request message carries the IMEI and/or the IMSI. An objective of storing the ICCID and the IMEI and/or the IMSI by the second operator network is to make preparation for a next handover between operator networks, where when the UE performs a handover between operator networks next time, the second operator network also needs to perform verification on the UE according to the stored ICCID and the IMEI and/or the IMSI.

416. The second remote management platform sends an indication message to the eUICC through the UE, where the indication message carries the acquired subscription information of the second operator network and related configuration information of the second operator network.

Optionally, the indication message may indicate that the eUICC verification succeeds, and/or instruct the eUICC to perform a handover.

417. After receiving the indication message, the eUICC parses received related configuration information, and sends parsed related configuration information of the second operator network to the UE.

418. The UE performs configuration according to the parsed related configuration information of the second operator network, so that the UE performs a handover to the second operator network.

Specifically, the UE sends the received subscription information of the second operator network and the related configuration information of the second operator network to the eUICC; the eUICC stores the received subscription information of the second operator network, parses the received related configuration information of the second operator network, and sends a parsing result to the UE; and the UE receives the parsed related configuration information, and configures the UE itself according to the parsed related configuration information, so that the UE performs a handover to the second operator network, and performs an network activity, such as Internet access and short message reception, by using the second operator network.

Further, the eUICC breaks the data path to the second remote management platform by using the UE, and enables, by using the second operator network, the UE to establish a new data path between the UE and the second remote management platform. Specifically, this step may be that the eUICC sends, to the UE, a request message for breaking the data path; and when receiving the request message for breaking the data path, the UE breaks the data path between the UE and the second remote management platform, and enables, by using the second operator network, the UE to establish the new data path between the UE and the second remote management platform. A person skilled in the art may learn that a specific process of enabling, by using the second operator network, the UE to establish the new data path between the UE and the second remote management platform is disclosed in the prior art, which is not described any further in the present invention.

Further, the eUICC may further send an acknowledgement message to the second remote management platform by using the UE, where the acknowledgement message is used to acknowledge whether the second operator network serves the UE; and the second remote management platform learns that the acknowledgement message is sent over the new data path connection established between the UE and the second remote management platform, and may acknowledge that the subscription information of the second operator network is used, and consider that the second operator network serves the UE.

Further, the UE makes that the subscription information of the first operator network is in an idle state (Idle state).

419. The verification result received by the second remote management platform indicates that the verification fails, and the second remote management platform sends, by using the UE, an indication message to the eUICC according to content carried in the verification result, so that the eUICC does not perform a handover between operator networks for the UE.

Specifically, the eUICC receives the indication message; and when the indication message indicates that the eUICC verification fails, the eUICC may send no handover instruction to the UE, or the eUICC may instruct the UE not to perform a handover to the second operator network.

It should be noted that the indication message in this embodiment may, in actual use, be a message such as a report message, an inform message, or an indicate message.

Optionally, if the unauthorized user uses a stolen device and/or a cloned eUICC, the remote management platform may instruct the eUICC to set the eUICC to a locked state.

Optionally, if the unauthorized user uses a device in arrears, the eUICC may continue to use the subscription information of the first operator network. Further, the eUICC prompts for arrears.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE. Further, in this embodiment, in a case in which a network architecture has a plurality of remote management platforms, a signaling interaction between the remote management platforms is performed to achieve security control on the UE.

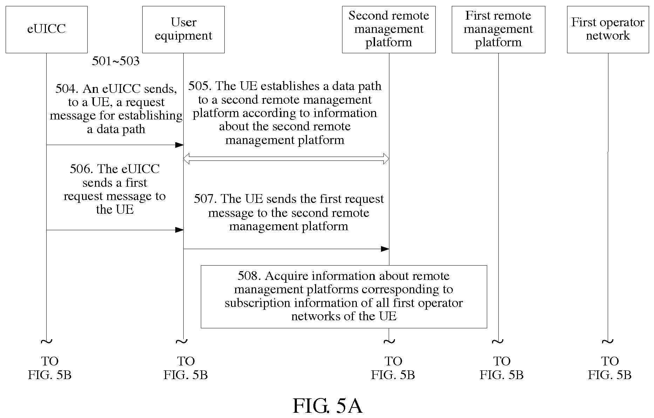

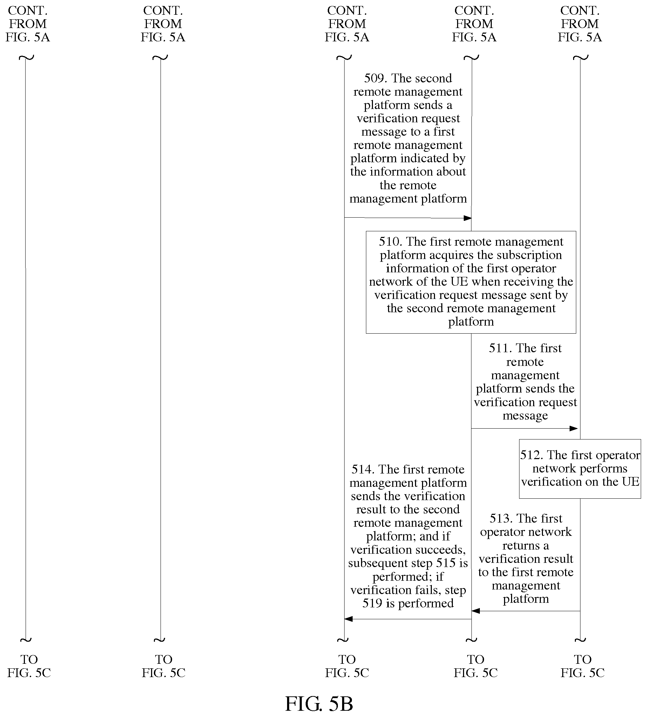

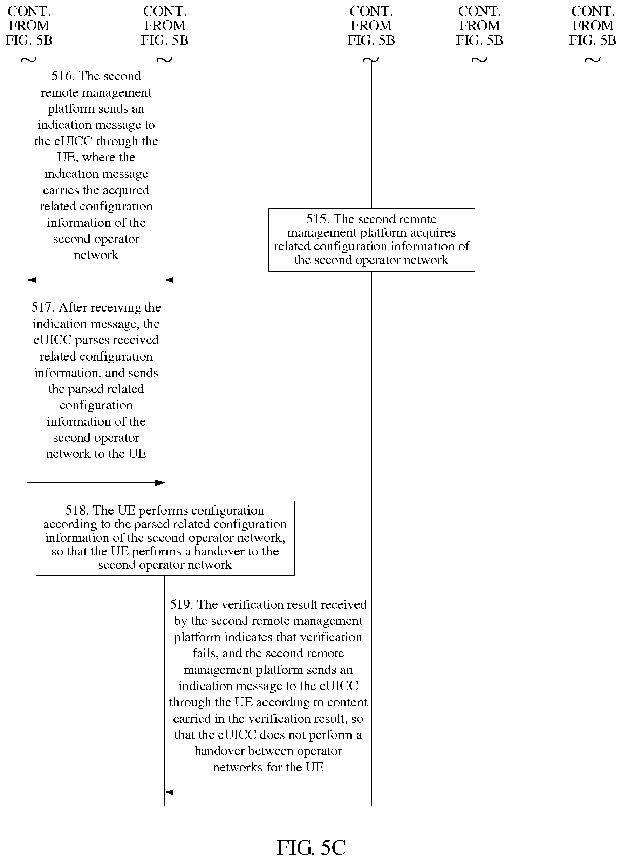

FIG. 5 is a flowchart of a method for a handover between operator networks according to an embodiment of the present invention. In this embodiment, it is assumed that there is a plurality of remote management platforms in a network architecture. For ease of description, a remote management platform that currently serves a UE is referred to as a first remote management platform, and another remote management platform is referred to as a second remote management platform. This embodiment is described merely by assuming a scenario in which the UE previously performed a handover between operator networks and an eUICC in the UE stores subscription information of a second operator network. Referring to FIG. 5, this embodiment specifically includes the following:
501. Detect whether a UE meets a preset handover condition.

In this embodiment, the preset handover condition may include at least any one of the following: the UE is out of coverage of the first operator network, a geographic location of the UE changes, a clock time of the UE is within a preset time segment, or a preset event occurs on the UE.
(1) The geographic location of the UE changes. In order to allow the UE to use different operator networks in different geographical areas according to an actual requirement, a change of the geographic location may be used as the preset handover condition for triggering a determining process in step 502. Specifically, when the UE detects that its geographic location changes, for example, detects that the UE roams from one geographical area to another, the UE meets the preset handover condition, and triggers the determining process in step 502. Specifically, the UE may learn its geographic location according to cell broadcast or a GPS (Global Positioning System, global positioning system), and determine, according to its current geographic location, whether the geographic location changes; or may learn, in another manner, whether the geographic location changes. The present invention is not limited thereto.
(2) The clock time of the UE is within the preset time segment. In order to allow the UE to use different operator networks within different time segments, that the clock time is within the preset time segment may be used as the preset handover condition for triggering the determining process in step 502. Specifically, the preset time segment and an operator network that serves the UE within the preset time segment may be set for the UE; the UE detects whether the clock time of the UE is within the preset time segment; and when the clock time of the UE is within the preset time segment, the UE meets the preset handover condition, and triggers the determining process in step 502. There may be one or more preset time segments, which is not specifically limited in the present invention. For example, an operator network that currently serves the UE is China Unicom, a preset time segment is 17:00-20:00, and an operator network that provides a service within the preset time segment is China Mobile; accordingly, China Unicom serves the UE beyond 17:00-20:00, and when a clock time is within the preset time segment, that is, 17:00-20:00, the UE meets the preset handover condition and triggers step 502 and the subsequent process, so that China Mobile serves the UE within 17:00-20:00. That the clock time is within the preset time segment may be understood as that the clock time is within a preset time, where the preset time may be one time point within the preset time segment, for example, may be any one time within the preset time segment 17:00-20:00.
(3) The preset event occurs on the UE. The preset event is used as the preset handover condition for triggering step 502 and the subsequent process, so that after the preset event occurs on the UE, an operator network different from that before the preset event occurs provides a service. For example, the preset event is Internet access. If a first operator network that serves the UE is China Mobile, when an Internet access event occurs, step 502 and the subsequent process are triggered, so that the UE performs a handover to a second operator network (assuming that it is China Telecom), and that China Telecom always provides a service during an entire process of Internet access.
(4) The UE is out of coverage of the first operator network (that is, a current network). When the UE is out of coverage of the current network, the UE may directly perform a handover to another operator network.

Specifically, when the UE detects that signal strength of the first operator network is smaller than a preset threshold, it may be considered that the UE is out of the coverage of the first operator network, where signal strength detection is disclosed in the prior art, and is not described any further in the present invention.

Optionally, before step 501, the method may further include: setting the preset handover condition of the UE. The preset handover condition may be set and adjusted by a user according to a use requirement, which is not specifically limited in the present invention. In addition, the UE may provide an interface for setting the preset handover condition, so that the user sets the preset handover condition; in the interface, a step of prompting may be provided for the user, so that the user may set the preset handover condition according to the step of prompting.

502. When learning through detection that the UE meets the preset handover condition, determine whether an eUICC of the UE stores subscription information of a second operator network; and if yes, perform step 503.

When learning through detection that the UE meets the preset handover condition, the user equipment UE may learn that it needs to perform a handover from the first operator network to the second operator network.

The subscription information of the second operator network is subscription information between the UE and the second operator network, and is a basis for determining whether the UE has subscribed to the second operator network. Specifically, the subscription information may be a telephone number of the UE. By means of determining whether the eUICC of the UE stores the subscription information of the second operator network, it may be determined whether the UE performs a handover to the second operator network for the first time. If the eUICC stores the subscription information of the second operator network, the UE previously performed a handover to the second operator network; if the eUICC of the UE stores no subscription information of the second operator network, the UE performs a handover to the second operator network for the first time.

A person skilled in the art may learn that if it is detected that the UE does not meet the preset handover condition, the first operator network may continue to serve the UE.

A difference between this embodiment and the embodiment shown in FIG. 4 lies in that, this embodiment is described by assuming a scenario in which the UE previously performed a handover between operator networks, and the eUICC in the UE stores the subscription information of the second operator network.

503. The UE sends a request message for performing a handover to the second operator network to the eUICC, so that the eUICC requests a remote management platform of the second operator network to perform a handover to the second operator network.

Steps 501 to 503 are similar to steps 301 to 303, and are not described any further in this embodiment.

504. The eUICC sends, to the UE, a request message for establishing a data path.

That the eUICC sends, to the UE, a request message for establishing a data path may be understood as that the eUICC initiates, to the UE by using the first operator network or an MVNO (Mobile Virtual Network Operator, mobile virtual network operator), the request message for establishing a data path, where the request message for establishing a data path is used to request the UE to establish a data path between the UE and the second remote management platform. The MVNO is a frequency band that is specially open to the UE, and is used to transmit subscription information of an operator network.

505. The UE establishes a data path to a second remote management platform according to information about the second remote management platform.

The information about the second remote management platform is stored in the eUICC. A person skilled in the art may learn that the information about the remote management platform may include an address of the remote management platform, and the like.

It should be noted that the eUICC establishes a data path to the second remote management platform by using the UE; although the UE has a forwarding function in between, it is allowed that the UE does not parse content exchanged between the eUICC and the second remote management platform. Therefore, logically, the eUICC and the second remote management platform may be directly connected.

Subsequent signaling interactions between the UE and the second remote management platform in this embodiment are implemented by using the data path established by the UE to the second remote management platform.

A person skilled in the art may learn that the eUICC may store information about a plurality of remote management platforms, and the UE may acquire information about a remote management platform from the eUICC, so as to establish a data path to the remote management platform.

506. The eUICC sends a first request message to the UE, where the first request message is used to request a handover to the second operator network, and the first request message carries an ICCID of the eUICC.

It should be noted that the eUICC sends the first request message to the UE, and the UE sends the request to the second remote management platform; in essence, this process is an interaction between the eUICC and the second remote management platform.

507. The UE sends a first request message to the second remote management platform, where the first request message carries the ICCID of the eUICC.

Optionally, the first request message carries the ICCID, and may further carry another identity of the eUICC, such as an IMSI and/or an IMEI. This embodiment of the present invention of the present invention is described merely by assuming that the identity of the eUICC is the ICCID. Preferably, the identity of the eUICC may also be an IMSI (International Mobile Subscriber Identity, international mobile subscriber identity), an IMEI (International Mobile Equipment Identity, international mobile equipment identity), or the like.

Steps 506 to 507 are a process in which the eUICC requests the second remote management platform of the second operator network to perform a handover to the second operator network.

508. The second remote management platform acquires information about a remote management platform corresponding to subscription information of all first operator networks of the UE when receiving the first request message sent by the UE.

A person skilled in the art may learn that subscription information of an operator network includes information about a remote management platform of the operator network, or a person skilled in the art may learn that the remote management platforms are interconnected and each of the remote management platforms may maintain a relationship table indicating a correspondence between a remote management platform and each operator; accordingly, the operator network may acquire, by using the subscription information, the information about the remote management platform corresponding to the subscription information. This process is not specifically limited in this embodiment.

In a case in which the subscription information of the operator network includes the information about the remote management platform of the operator network, in step 508, the acquiring information about a remote management platform corresponding to subscription information of a first operator network of the UE may be specifically divided into the following two stages (1) and (2):
(1) Acquire the subscription information of the first operator network of the UE.
   Specifically, acquiring the subscription information of the first operator network of the UE includes but is not limited to any one of the following methods: (1) Determine, according to the ICCID of the eUICC, whether the second remote management platform prestores the subscription information of the first operator network of the UE; and if yes, the second remote management platform acquires the locally-stored subscription information of the first operator network of the UE; if no, the second remote management platform sends a message for acquiring subscription information of an operator network to the UE, and the UE acquires the subscription information of the first operator network from the eUICC of the UE, so that the UE returns the subscription information of the first operator network that is currently stored by the UE. (2) When the second request message sent by the UE carries the subscription information of the first operator network of the UE, acquire the subscription information of the first operator network in the second request message.
   It should be noted that the UE may store subscription information of a plurality of first operator networks, where the subscription information of the plurality of first operator networks may include subscription information of an operator network that currently serves the UE and subscription information of another operator network that previously served the UE. Therefore, optionally, when receiving the second request message sent by the UE, the second remote management platform may acquire one or more subscription information of first operator network of the UE that is stored by the remote management platform, that is, may acquire subscription information of any one first operator network of the UE that is stored by the second remote management platform, acquire subscription information of all first operator networks of the UE that is stored by the second remote management platform, or acquire subscription information of a plurality of first operator networks of the UE that is stored by the second remote management platform.
(2) Acquire the information about the remote management platform corresponding to the subscription information of all first operator networks of the UE. Specifically, the information about the first remote management platform corresponding to the subscription information is extracted from the acquired subscription information of the first operator network.

In a case in which the operator network acquires, by using the subscription information, the information about the remote management platform corresponding to the subscription information, step 508 may include any one of the following methods:
(1) Determine whether the second request message carries the information about the first remote management platform corresponding to the subscription information of the first operator network; and if yes, extract the information about the first remote management platform, which is corresponding to the subscription information of the first operator network and is carried in the second request message; if no, acquire, from the UE, the information about the first remote management platform, which is corresponding to the subscription information of the first operator network and is currently stored by the UE.
(2) Without determining content carried in the second request message, directly acquire, from the UE, the information about the first remote management platform, which is corresponding to the subscription information of the first operator network and is currently stored by the UE.
(3) Extract the information about the remote management platform, which is carried in the second request message, and use the extracted information about the remote management platform as the information about the first remote management platform corresponding to the subscription information about the first operator network.

509. The second remote management platform sends, according to the information about the remote management platform corresponding to the subscription information of the first operator network, a verification request message to a first remote management platform indicated by the information about the remote management platform, where the verification request message carries the ICCID of the eUICC.

The verification request message carries the ICCID. Further, the verification request message may further carry the IMSI and/or the IMEI.

It should be noted that, for the UE, there may be one or more operator networks that serve the UE, where each operator network is corresponding to one remote management platform; therefore, the eUICC may store information about one or more remote management platforms. This embodiment is described merely by assuming that one operator network serves the UE; in a scenario in which a plurality of operator networks serves the UE, a verification request message may be sent to the plurality of remote management platforms or a verification request message is sent to any one of the plurality of remote management platforms; that is, the verification request message may be sent to one or more of the plurality of remote management platforms.

510. The first remote management platform acquires the subscription information of the first operator network of the UE when receiving the verification request message sent by the second remote management platform.

Specifically, acquiring the subscription information of the first operator network of the UE includes but is not limited to any one of the following methods: (1) Determine, according to the ICCID of the eUICC, whether the first remote management platform prestores the subscription information of the first operator network of the UE; and if yes, the first remote management platform acquires the locally-stored subscription information of the first operator network of the UE; if no, the first remote management platform sends a message for acquiring subscription information of an operator network to the UE, and the UE acquires the subscription information of the first operator network from the eUICC of the UE, so that the UE returns the subscription information of the first operator network that is currently stored by the UE. (2) When the second request message sent by the UE carries the subscription information of the first operator network of the UE, acquire the subscription information of the first operator network in the second request message.

511. The first remote management platform sends, according to the acquired subscription information of the first operator network, a verification request message to the first operator network corresponding to the subscription information of the first operator network, where the verification request message carries the ICCID of the eUICC.

It should be noted that steps 507 to 511 may be further replaced with the following steps: the UE sends the first request message to the second remote management platform, where the first request message carries the currently stored subscription information of the first operator network and information about the first remote management platform corresponding to the subscription information of the first operator network; the second remote management platform sends the verification request message to the corresponding first remote management platform according to the information about the first remote management platform carried in the second request message, where the verification request message carries the subscription information of the first operator network; and when receiving the verification request message, the first remote management platform sends the verification request message to the corresponding first operator network according to the subscription information of the first operator network carried in the verification request message.

512. When receiving the verification request message sent by the first remote management platform, the first operator network performs, according to the ICCID carried in the verification request message, verification on the eUICC disposed in the UE.

Verification performed on the UE is to verify, according to the ICCID carried in the verification request message, whether the UE is an authorized device, which may specifically include: when the verification request message carries only the ICCID of the eUICC, the first operator network may acquire, by using the ICCID, an IMEI corresponding to the ICCID, and verify, according to the IMEI and the ICCID, whether the UE is a device in arrears and/or whether the UE is a stolen device; and
further, when the verification request message carries the ICCID and the IMEI, verify, according to the IMEI and the ICCID, whether the UE is a device in arrears, and/or whether the UE is a stolen device, and/or whether an eUICC card in the UE is a cloned card.

Verification performed on the UE may specifically include at least one of the following:
(1) Verify whether the UE is a device in arrears, which may specifically include: the first operator network acquires an IMSI (International Mobile Subscriber Identity, international mobile subscriber identity) of a user according to the ICCID, queries a charging server according to the IMSI, and determines, according to user charging information in the charging server, whether a user corresponding to the IMSI is in arrears; and if it is learned, by query, that the user is in arrears, a verification result sent to the remote management platform in step 513 indicates that the verification fails, where the verification result may further include non-payment information, so as to indicate that the UE is in arrears; if it is learned, by query, that the UE is not in arrears, the verification result sent to the remote management platform indicates that the verification succeeds.
(2) Verify whether the UE is a stolen device, which specifically includes: the first operator network queries an EIR (Equipment Identity Register, equipment identity register) according to the IMEI, where the EIR includes one or more databases, and the database or databases are used to store IMEI information (a whitelist, a graylist, and a blacklist) of the UE; queries, according to the IMEI, whether the IMEI is on the blacklist; and if the IMEI is on the blacklist, a device corresponding to the IMEI is a stolen device. If the UE is a stolen device, a verification result sent to the remote management platform in step 513 indicates that the verification fails, where the verification result carries an identity indicating that the device is an unauthorized device, so as to indicate that the verification fails, and may further indicate locking of the eUICC; if the user equipment is not a stolen device, the verification result sent to the remote management platform indicates that the verification succeeds.
(3) Verify whether the eUICC in the UE is a cloned card, which specifically includes: determining whether an IMEI corresponding to the ICCID stored by the first operator network is the same as an IMEI corresponding to the ICCID carried in the verification request message; and if yes, the eUICC card of the UE is normal, and a verification result sent to the remote management platform in step 513 indicates that the verification succeeds; if no, the verification result sent to the remote management platform in step 513 indicates that the verification fails, and the verification result may further carry an instruction for locking a device, so as to indicate that the verification fails, and indicate locking of the eUICC. An IMEI of each UE is corresponding to a unique ICCID, the ICCID is the unique identification number of an eUICC, and there is an unchangeable one-to-one correspondence between an ICCID and an IMEI. Therefore, the correspondence between an ICCID and an IMEI may be analyzed to learn whether the eUICC in the UE is a cloned card.

513. The first operator network returns a verification result to the first remote management platform.

514. The first remote management platform sends the verification result to the second remote management platform; and if the verification succeeds, subsequent step 515 is performed; if the verification fails, step 519 is performed.

515. The second remote management platform acquires related configuration information of the second operator network.

In this embodiment, step 515 may be an interaction process between the second remote management platform and the second operator network, which specifically includes: the second remote management platform sends the second request message to the second operator network, where the second request message carries the ICCID, and further, the second request message may further carry the IMEI and/or the IMSI; the second operator network queries, according to the ICCID carried in the second request message, whether the UE has subscribed to the second operator network, and if yes, sends the related configuration information of the second operator network to the second remote management platform, that is, the second remote management platform acquires the related configuration information of the second operator network.

516. The second remote management platform sends an indication message to the eUICC through the UE, where the indication message carries the acquired related configuration information of the second operator network.

Optionally, the indication message may indicate that the eUICC verification succeeds, and/or instruct the eUICC to perform a handover.

517. After receiving the indication message, the eUICC parses received related configuration information, and sends parsed related configuration information of the second operator network to the UE.

518. The UE performs configuration according to the parsed related configuration information of the second operator network, so that the UE performs a handover to the second operator network.

Specifically, the UE sends the received related configuration information of the second operator network to the eUICC; the eUICC parses the received related configuration information of the second operator network, and sends a parsing result to the UE; and the UE receives the parsed related configuration information, and configures the UE itself according to the parsed related configuration information, so that the UE performs a handover to the second operator network and performs an network activity, such as Internet access and short message reception, by using the second operator network.

Further, the eUICC breaks the data path to the second remote management platform by using the UE, and enables, by using the second operator network, the UE to establish a new data path between the UE and the second remote management platform. Specifically, this step may be that the eUICC sends, to the UE, a request message for breaking the data path; and when receiving the request message for breaking the data path, the UE breaks the data path between the UE and the second remote management platform, and enables, by using the second operator network, the UE to establish the new data path between the UE and the second remote management platform. A person skilled in the art may learn that a specific process of enabling, by using the second operator network, the UE to establish the new data path between the UE and the second remote management platform is disclosed in the prior art, which is not described any further in the present invention.

Further, the eUICC may further send an acknowledgement message to the second remote management platform by using the UE, where the acknowledgement message is used to acknowledge whether the second operator network serves the UE; and the second remote management platform learns that the acknowledgement message is sent over the new data path connection established between the UE and the second remote management platform, and may acknowledge that the subscription information of the second operator network is used, and consider that the second operator network serves the UE.

Further, the UE makes that the subscription information of the first operator network is in an idle state (Idle state).

519. The verification result received by the second remote management platform indicates that the verification fails, and the second remote management platform sends, by using the UE, an indication message to the eUICC according to content carried in the verification result, so that the eUICC does not perform a handover between operator networks for the UE.

Specifically, the eUICC receives the indication message; and when the indication message indicates that the verification fails, the eUICC may send no handover instruction to the UE, or the eUICC may instruct the UE not to perform a handover to the second operator network.

It should be noted that the indication message in this embodiment may, in actual use, be a message such as a report message, an inform message, or an indicate message.

Optionally, if the unauthorized user uses a stolen device and/or a cloned eUICC, the remote management platform may instruct the eUICC to set the eUICC to a locked state.

Optionally, if the unauthorized user uses a device in arrears, the eUICC may continue to use the subscription information of the first operator network. Further, the eUICC prompts for arrears.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE. Further, in this embodiment, in a case in which a network architecture has a plurality of remote management platforms, a signaling interaction between the remote management platforms is performed to achieve security control on the UE.

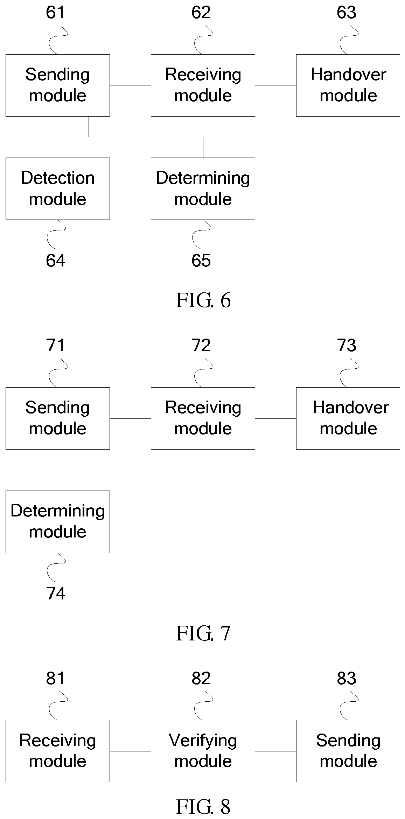

FIG. 6 is a schematic structural diagram of a user equipment according to an embodiment of the present invention. Referring to FIG. 6, the user equipment includes:
a sending module 61, configured to send a request message to an embedded universal integrated circuit card eUICC when it is learned that the UE needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message;
a receiving module 62, configured to receive the indication of the eUICC; and
a handover module 63, configured to perform or not perform a handover to the second operator network according to the indication.

Optionally, the user equipment further includes:
a detecting module 64, configured to detect whether the UE meets a preset handover condition; where:
correspondingly, the sending module 61 is specifically configured to send the request message to the eUICC when it is learned, through detection by the detecting module 64, that the UE meets the preset handover condition.

Optionally, the preset handover condition includes at least any one of the following: the UE is out of coverage of the first operator network, a geographic location of the UE changes, a clock time of the UE is within a preset time segment, or a preset event occurs on the UE.

Correspondingly, the detecting module 64 is specifically configured to detect whether the UE is out of coverage of the first operator network, a geographic location of the UE changes, a clock time of the UE is within a preset time segment, or a preset event occurs on the UE.
(1) Whether the geographic location of the UE changes. In order to allow the UE in different geographical areas to use different operator networks according to an actual requirement, a change of the geographic location may be used as the preset handover condition for triggering a determining process in step 202. Specifically, when the UE detects that its geographic location changes, for example, detects that the UE roams from one geographical area to another, the UE meets the preset handover condition, and triggers the determining process in step 202. Specifically, the UE may learn its geographic location according to cell broadcast or a GPS (Global Positioning System, global positioning system), and determine, according to its current geographic location, whether the geographic location changes; or may learn, in another manner, whether the geographic location changes. The present invention is not limited thereto.
(2) Whether the clock time of the UE is within the preset time segment. In order to allow the UE to use different operator networks within different time segments, that the clock time is within the preset time segment may be used as the preset handover condition for triggering the determining process in step 202. Specifically, the preset time segment and an operator network that serves the UE within the preset time segment may be set for the UE; the UE detects whether the clock time of the UE is within the preset time segment; and when the clock time of the UE is within the preset time segment, the UE meets the preset handover condition, and triggers the determining process in step 202. There may be one or more preset time segments, which is not specifically limited in the present invention. For example, an operator network that currently serves the UE is China Unicom, a preset time segment is 17:00-20:00, and an operator network that provides a service within the preset time segment is China Mobile; accordingly, China Unicom serves the UE beyond 17:00-20:00, and when a clock time is within the preset time segment, that is, 17:00-20:00, the UE meets the preset handover condition and triggers step 202 and the subsequent process, so that China Mobile serves the UE within 17:00-20:00. That the clock time is within the preset time segment may be understood as that the clock time is within a preset time, where the preset time may be one time point within the preset time segment, for example, may be any one time within the preset time segment 17:00-20:00.
(3) Whether the preset event occurs on the UE. The preset event is used as the preset handover condition for triggering step 202 and the subsequent process, so that after the preset event occurs on the UE, an operator network different from that before the preset event occurs provides a service. For example, the preset event is Internet access. If a first operator network that serves the UE is China Mobile, when an Internet access event occurs, step 202 and the subsequent process are triggered, so that the UE performs a handover to a second operator network (assuming that it is China Telecom), and that China Telecom always provides a service during an entire process of Internet access.
(4) Whether the UE is out of coverage of the first operator network (that is, a current network). When the UE is out of coverage of the current network, the UE may directly perform a handover to another operator network.

Specifically, when the detecting module 64 detects that signal strength of the first operator network is smaller than a preset threshold, it may be considered that the UE is out of the coverage of the first operator network, where signal strength detection is disclosed in the prior art, and is not described any further in the present invention.

Further, the detecting module 64 is further configured to set the preset handover condition of the UE. The preset handover condition may be set and adjusted by a user according to a use requirement, which is not specifically limited in the present invention. In addition, the UE may provide an interface for setting the preset handover condition, so that the user sets the preset handover condition; in the interface, a step of prompting may be provided for the user, so that the user may set the preset handover condition according to the step of prompting.

Optionally, the user equipment further includes:
a determining module 65, configured to determine whether the eUICC stores subscription information of the second operator network. Specifically, the determining module 65 initiates a determining request to the eUICC when the preset handover condition is met, so that the eUICC determines whether the eUICC stores the subscription information of the second operator network, and notifies the UE of a determining result; or the UE may query from the eUICC whether currently stored subscription information of operator networks includes the subscription information of the second operator network, and if yes, determine that the eUICC currently stores the subscription information of the second operator network.

Correspondingly, the sending module 61 is specifically configured to send a first request message to the eUICC when the eUICC stores the subscription information of the second operator network, so that the eUICC requests the remote management platform of the second operator network to perform a handover to the second operator network.

Optionally, the first request message carries the ICCID, and may further carry another identity of the eUICC, such as an IMSI and/or an IMEI. This embodiment of the present invention is described merely by assuming that the identity of the eUICC is the ICCID. Preferably, the identity of the eUICC may also be an IMSI (International Mobile Subscriber Identity, international mobile subscriber identity), an IMEI (International Mobile Equipment Identity, international mobile equipment identity), or the like.

The sending module 61 is further configured to send a second request message to the eUICC when the eUICC stores no subscription information of the second operator network, so that the eUICC requests acquisition of the subscription information of the second operator network from the remote management platform of the second operator network.

Optionally, the second request message carries the ICCID, and may further carry another identity of the eUICC, such as an IMSI and/or an IMEI. This embodiment of the present invention is described merely by assuming that the identity of the eUICC is the ICCID. Preferably, the identity of the eUICC may also be an IMSI (International Mobile Subscriber Identity, international mobile subscriber identity), an IMEI (International Mobile Equipment Identity, international mobile equipment identity), or the like.

The subscription information of the second operator network is subscription information between the UE and the second operator network, and is a basis for determining whether the UE has subscribed to the second operator network. Specifically, the subscription information may be a telephone number of the UE. By means of determining whether the eUICC of the UE stores the subscription information of the second operator network, it may be determined whether the UE performs a handover to the second operator network for the first time. If the eUICC stores the subscription information of the second operator network, the UE previously performed a handover to the second operator network; if the eUICC of the UE stores no subscription information of the second operator network, the UE performs a handover to the second operator network for the first time.

A person skilled in the art may learn that if it is detected that the UE does not meet the preset handover condition, the first operator network may continue to serve the UE.

Optionally, the handover module 63 is specifically configured to perform a handover to the second operator network when the indication is performing a handover to the second operator network; or
not perform a handover to the second operator network when the indication is not performing a handover to the second operator network.

Optionally, the handover module 63 is specifically configured to, when the indication is performing a handover to the second operator network and the indication carries related configuration information of the second operator network, perform configuration according to the related configuration information of the second operator network, and perform a handover to the second operator network.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE.

FIG. 7 is a schematic structural diagram of an embedded universal integrated circuit card according to an embodiment of the present invention. Referring to FIG. 7, the embedded universal integrated circuit card includes:
a sending module 71, configured to send a request message to a remote management platform of a second operator network through a UE when the eUICC disposed in the UE learns that the UE needs to perform a handover from a first operator network to the second operator network, where the request message carries an identity of the eUICC, so that the remote management platform of the second operator network performs verification on the eUICC according to at least the identity, and sends an indication message to the eUICC through the UE according to a verification result;
a receiving module 72, configured to receive the indication message; and
a handover module 73, configured to instruct, according to the indication message, the UE to perform or not perform a handover to the second operator network.

Optionally, the embedded universal integrated circuit card further includes:
a determining module 74, configured to determine whether subscription information of the second operator network is stored locally; where:
correspondingly, the sending module 71 is further configured to, when the subscription information of the second operator network is stored locally, send a first request message to the remote management platform of the second operator network through the UE, where the first request message is used to request a handover to the second operator network, and the first request message carries the identity of the eUICC; and
the sending module 71 is further configured to, when the subscription information of the second operator network is not stored locally, send a second request message to the remote management platform of the second operator network through the UE, where the second request message is used to request acquisition of the subscription information of the second operator network, and the second request message carries the identity of the eUICC.

Optionally, the handover module 73 is specifically configured to, when the indication message indicates that the eUICC verification fails, send no handover instruction to the UE, or instruct the UE not to perform a handover to the second operator network; or
when the indication message indicates that the eUICC verification succeeds, instruct the UE to perform a handover to the second operator network.

The handover module 73 is further specifically configured to, when the indication message indicates locking of the eUICC, lock the eUICC; and send no handover instruction to the UE, or instruct the UE not to perform a handover to the second operator network; or
when the indication message indicates that the eUICC is in arrears, send no handover instruction to the UE, or instruct the UE not to perform a handover to the second operator network.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE.

FIG. 8 is a schematic structural diagram of a remote management platform according to an embodiment of the present invention. Referring to FIG. 8, the remote management platform includes:
a receiving module 81, configured to receive a request message sent by a UE, where the request message carries an identity of an embedded universal integrated circuit card eUICC disposed in the UE;
a verifying module 82, configured to perform verification on the eUICC according to the identity to acquire a verification result; and
a sending module 83, configured to send an indication message to the eUICC through the UE according to the verification result, so as to instruct the eUICC to perform or not perform a handover between operator networks for the UE.

Optionally, the verifying module 82 is specifically configured to, when the request message sent by the UE is received, acquire all subscription information of a first operator network of the UE.

The verifying module 82 is further configured to send, according to the acquired subscription information of the first operator network, a verification request message to the first operator network corresponding to the subscription information of the first operator network, where the verification request message carries the identity of the eUICC, so that the first operator network performs verification on the UE according to the identity of the eUICC, and returns a verification result.

Correspondingly, the receiving module 81 is further configured to receive the verification result.

Optionally, the verifying module 82 is specifically configured to, when the request message sent by the eUICC is received, acquire information about a remote management platform corresponding to subscription information of a first operator network from the eUICC.

The verifying module 82 is further configured to send a verification request message to the remote management platform of the first operator network according to the information about the remote management platform corresponding to the subscription information of the first operator network, so that the remote management platform of the first operator network performs verification on the UE, and returns a verification result.

Correspondingly, the receiving module 81 is configured to receive the verification result.

Optionally, the sending module 83 is specifically configured to, when the verification result indicates that the verification succeeds, send the indication message to the eUICC through the UE, so as to instruct the eUICC to perform a handover to the second operator network; or
when the verification result indicates that the verification fails, and the UE is an unauthorized device or the eUICC is an unauthorized eUICC, send the indication message to the eUICC through the UE, so that the eUICC locks the eUICC, and the eUICC sends no handover instruction to the UE, or the eUICC instructs the UE not to perform a handover to the second operator network; or
when the verification result indicates that the verification fails, and the UE is in arrears, send the indication message to the eUICC through the UE to indicate that the UE is in arrears, so that the eUICC sends no handover instruction to the UE, or the eUICC instructs the UE not to perform a handover to the second operator network.

In this embodiment of the present invention, a user equipment UE sends a request message to an embedded universal integrated circuit card eUICC when the UE learns that it needs to perform a handover from a first operator network to a second operator network, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message; and the UE receives the indication of the eUICC, and performs or does not perform a handover to the second operator network according to the indication. With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE.

It should be noted that, when a service of a handover between operator networks is executed by the remote management platform, the user equipment, and the embedded universal integrated circuit card provided by the foregoing embodiments, the division of the functional modules is used merely as an example for description; in an actual application, the functions may be allocated, according to requirements, to different functional modules to complete, that is, internal structures of the system are divided into different functional modules, so as to complete all or a part of functions described above. In addition, the remote management platform, the user equipment, and the embedded universal integrated circuit card provided by the foregoing embodiments pertain to a same conception as the method embodiment for a handover between operator networks; reference may be made to the method embodiment for specific implementation processes of the remote management platform, the user equipment, and the embedded universal integrated circuit card, which are not further described in this embodiment.

A person of ordinary skill in the art may understand that all or a part of steps of the foregoing embodiments may be implemented by hardware or a program instructing relevant hardware. The program may be stored in a computer readable storage medium. The storage medium may include a read-only memory, a magnetic disk, an optical disc, or the like.

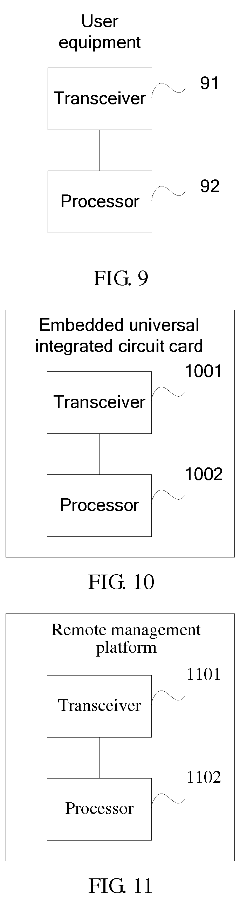

FIG. 9 is a schematic structural diagram of a user equipment according to an embodiment of the present invention. Referring to FIG. 9, the user equipment includes:
a transceiver 91, configured to receive and send a message; and
a processor 92, coupled to the transceiver 91 and configured to, when learning that it needs to perform a handover from a first operator network to a second operator network, trigger the transceiver 91 to send a request message to an embedded universal integrated circuit card eUICC, so that the eUICC sends a request for a handover to the second operator network to a remote management platform of the second operator network, and the remote management platform of the second operator network performs verification on the eUICC, and returns an indication message to the eUICC according to a verification result, to enable the eUICC to send an indication to the UE according to the indication message.

The transceiver 91 is configured to receive the indication of the eUICC.

The processor 92 is further configured to perform or not perform a handover to the second operator network according to the indication.

Optionally, the processor 92 is further configured to detect whether a preset handover condition is met.

The processor 92 is further configured to, when learning through detection that the preset handover condition is met, trigger the transceiver to send the request message to the eUICC.

Optionally, the preset handover condition includes at least any one of the following: the UE is out of coverage of the first operator network, a geographic location of the UE changes, a clock time of the UE is within a preset time segment, or a preset event occurs on the UE.

Optionally, the processor 92 is further configured to determine whether the eUICC stores subscription information of the second operator network; and if yes, trigger the transceiver 91 to send a request message for a handover to the second operator network to the eUICC, so that the eUICC requests the remote management platform of the second operator network to perform a handover to the second operator network; or
if no, trigger the transceiver 91 to send a request message for acquiring the subscription information of the second operator network to the eUICC, so that the eUICC requests acquisition of the subscription information of the second operator network from the remote management platform of the second operator network.

Optionally, the transceiver 91 is further configured to receive the indication of the eUICC, and when the indication is performing a handover to the second operator network, trigger the processor 92 to perform a handover to the second operator network.

Alternatively, the transceiver 91 is further configured to receive the indication of the eUICC, and not perform a handover to the second operator network when the indication is not performing a handover to the second operator network.

Optionally, the transceiver 91 is further configured to receive the indication of the eUICC; and when the indication is performing a handover to the second operator network and the indication carries related configuration information of the second operator network, trigger the processor 92 to perform configuration according to the related configuration information of the second operator network and perform a handover to the second operator network.

FIG. 10 is a schematic structural diagram of an embedded universal integrated circuit card according to an embodiment of the present invention. Referring to FIG. 10, the embedded universal integrated circuit card includes:
a transceiver 1001, configured to receive and send a message; and
a processor 1002, coupled to the transceiver 1001 and configured to, when learning that it needs to perform a handover from a first operator network to the second operator network, trigger the transceiver 1001 to send a request message to a remote management platform of the second operator network through a UE, where the request message carries an identity of the eUICC, so that the remote management platform of the second operator network performs verification on the eUICC according to at least the identity, and sends an indication message to the eUICC through the UE according to a verification result.

The transceiver 1001 is configured to receive the indication message, and trigger the processor 1002 to instruct, according to the indication message, the UE to perform or not perform a handover to the second operator network.

The processor 1002 is further configured to determine whether subscription information of the second operator network is stored locally; and
if yes, trigger the transceiver 1001 to send a first request message to the remote management platform of the second operator network through the UE, where the first request message is used to request a handover to the second operator network, and the first request message carries the identity of the eUICC; or
if no, trigger the transceiver 1001 to send a second request message to the remote management platform of the second operator network through the UE, where the second request message is used to request acquisition of the subscription information of the second operator network, and the second request message carries the identity of the eUICC.

Optionally, the transceiver 1001 is configured to receive the indication message; and when the indication message indicates that the eUICC verification fails, send no handover instruction to the UE, or trigger the processor to instruct the UE not to perform a handover to the second operator network.

Alternatively, the transceiver 1001 is configured to receive the indication message; and when the indication message indicates that the eUICC verification succeeds, trigger the processor 1002 to instruct the UE to perform a handover to the second operator network.

Optionally, when the indication message indicates locking of the eUICC, the processor 1002 is triggered to lock the eUICC; and send no handover instruction to the UE, or instruct the UE not to perform a handover to the second operator network.

Alternatively, when the indication message indicates that the eUICC is in arrears, no handover instruction is sent to the UE, or the processor 1002 is triggered to instruct the UE not to perform a handover to the second operator network.

FIG. 11 is a schematic structural diagram of a remote management platform according to an embodiment of the present invention. Referring to FIG. 11, the remote management platform includes:
a transceiver 1101, configured to receive and send a message, where:
specifically, the transceiver 1101 is configured to receive a request message that is sent through a UE by an embedded universal integrated circuit card eUICC disposed in the UE, where the request message carries an identity of the eUICC; and
a processor 1102, coupled to the transceiver 1101 and configured to perform verification on the eUICC according to the identity of the eUICC to acquire a verification result.

The transceiver 1101 is further configured to send an indication message to the eUICC through the UE according to the verification result, so as to instruct the eUICC whether to allow a handover to a second operator network.

Optionally, the processor 1102 is configured to, when the request message sent by the eUICC is received, acquire subscription information of a first operator network from the eUICC.

The transceiver 1101 is further configured to send, according to the acquired subscription information of the first operator network, a verification request message to the first operator network corresponding to the subscription information of the first operator network, where the verification request message carries the identity of the eUICC, so that the first operator network performs verification on the UE according to the identity of the eUICC, and returns a verification result.

The transceiver 1101 is further configured to receive the verification result.

Optionally, the processor 1102 is further configured to, when the request message sent by the eUICC is received, acquire information about a remote management platform corresponding to subscription information of a first operator network from the eUICC.

The transceiver 1101 is further configured to send a verification request message to the remote management platform of the first operator network according to the information about the remote management platform corresponding to the subscription information of the first operator network, so that the remote management platform of the first operator network performs verification on the UE, and returns a verification result.

The transceiver 1101 is further configured to receive the verification result.

The transceiver 1101 is further configured to, when the verification result indicates that the verification succeeds, send the indication message to the eUICC through the UE, so as to instruct the eUICC to perform a handover to the second operator network.

Alternatively, the transceiver 1101 is further configured to, when the verification result indicates that the verification fails, and the UE is an unauthorized device or the eUICC is an unauthorized eUICC, send the indication message to the eUICC through the UE, so that the eUICC locks the eUICC, and the eUICC sends no handover instruction to the UE, or the eUICC instructs the UE not to perform a handover to the second operator network.

Alternatively, the transceiver 1101 is further configured to, when the verification result indicates that the verification fails, and the UE is in arrears, send the indication message to the eUICC through the UE to indicate that the UE is in arrears, so that the eUICC sends no handover instruction to the UE, or the eUICC instructs the UE not to perform a handover to the second operator network.

With a technical solution according to the present invention, security verification can be performed on the UE according to an operator network that currently serves the UE, so that during a process of a handover between operator networks performed by the UE, security control is performed on the UE, and an unauthorized user, such as a user who maliciously enters arrears, a user of a stolen device, or a user of a cloned card, cannot perform a handover between operator networks, thereby improving security for the UE and the user of the UE.

It should be noted that there is a correspondence between the embodiments of the present invention, for example, mutual reference may be made to same parts between the method embodiments and apparatus embodiments, which is not described repeatedly.

## Claims

1. A method executed by an embedded universal integrated circuit card, eUICC, for a handover between a first and a second operator network, comprising:
Sending (204, 304), by the eUICC, which is disposed in a user equipment, UE, a request message to a remote management platform of a second operator network through the UE when the eUICC learns (202, 302) that the UE needs to perform a handover from the first operator network to the second operator network, wherein the request message carries an identity of the eUICC, so that the remote management platform of the second operator network performs verification on the eUICC according to at least the identity, and sends an indication message to the eUICC through the UE according to a verification result; and
receiving, by the eUICC, the indication message, and instructing, according to the indication message, the UE to perform or not perform a handover to the second operator network;
wherein the sending (204, 304), by the eUICC disposed in the UE, a request message to a remote management platform of a second operator network through the UE when the eUICC learns (202, 302) that the UE needs to perform a handover from a first operator network to the second operator network comprises:
determining, by the eUICC, whether subscription information of the second operator network is stored in the eUICC, wherein the subscription information of the second operator network is subscription information between the UE and the second operator network and is a basis for determining whether the UE has subscribed to the second operator network; and
if the subscription information of the second operator network is stored in the eUICC, sending (304), by the eUICC disposed in the UE, a first request message to the remote management platform of the second operator network through the UE, wherein the first request message is used to request a handover to the second operator network, and the first request message carries the identity of the eUICC; and
if the subscription information of the second operator network is not stored in the eUICC, sending (204), by the eUICC disposed in the UE, a second request message to the remote management platform of the second operator network through the UE, wherein the second request message is used to request acquisition of the subscription information of the second operator network, and the second request message carries the identity of the eUICC.

2. The method according to claim 1, wherein the receiving, by the eUICC, the indication message, and instructing, according to the indication message, the UE to perform or not perform a handover to the second operator network comprises:
receiving, by the eUICC, the indication message, and when the indication message indicates that the eUICC verification fails, sending, by the eUICC, no handover instruction to the UE, or instructing, by the eUICC, the UE not to perform a handover to the second operator network; or
receiving, by the eUICC, the indication message, and when the indication message indicates that the eUICC verification succeeds, instructing, by the eUICC, the UE to perform a handover to the second operator network.

3. The method according to claim 2, wherein when the indication message indicates that the eUICC verification fails, the sending, by the eUICC, no handover instruction to the UE, or instructing, by the eUICC, the UE not to perform a handover to the second operator network comprises:
when the indication message indicates locking of the eUICC, locking, by the eUICC, the eUICC, and sending, by the eUICC, no handover instruction to the UE, or instructing, by the eUICC, the UE not to perform a handover to the second operator network; or
when the indication message indicates that the UE is in arrears, sending, by the eUICC, no handover instruction to the UE, or instructing, by the eUICC, the UE not to perform a handover to the second operator network.

4. A method executed by a remote management platform of a second operator network for a handover between a first and the second operator network, comprising:
receiving by the remote management platform of the second operator network a request message that is sent through a UE by an embedded universal integrated circuit card eUICC disposed in the UE, wherein the request message carries an identity of the eUICC, so that the remote management platform of the second operator network performs verification on the eUICC according to at least the identity; further wherein the request message is a first request message which is used to request a handover to the second operator network if the subscription information of the second operator network is stored in the eUICC, or further wherein the request message is a second request message which is used to request acquisition of the subscription information of the second operator network if the subscription information of the second operator network is not stored in the eUICC, wherein the subscription information of the second operator network is subscription information between the UE and the second operator network and is a basis for determining whether the UE has subscribed to the second operator network;
performing (208, 308) verification on the eUICC according to at least the identity of the eUICC to acquire a verification result; and
sending (211, 311) an indication message to the eUICC through the UE according to the verification result, so as to instruct the UE according to the indication message whether to perform or not to perform a handover to a second operator network, wherein if the request message is the first request message, the indication message carries acquired subscription information of the second operator network, and wherein if the request message is the second request message, the indication message carries acquired subscription information of the second operator network and related configuration information of the second operator network.

5. The method according to claim 4, wherein the performing verification on the eUICC according to the identity of the eUICC to acquire a verification result comprises:
when receiving the request message sent by the eUICC, acquiring subscription information of a first operator network from the eUICC;
sending, according to the acquired subscription information of the first operator network, a verification request message to the first operator network corresponding to the subscription information of the first operator network, wherein the verification request message carries the identity of the eUICC, so that the first operator network performs verification on the UE according to the identity of the eUICC, and returns a verification result; and
receiving the verification result.

6. The method according to claim 4, wherein the performing verification on the eUICC according to the identity of the eUICC to acquire a verification result comprises:
when receiving the request message sent by the eUICC, acquiring information about a remote management platform corresponding to subscription information of the first operator network from the eUICC;
sending a verification request message to the remote management platform of the first operator network according to the information about the remote management platform corresponding to the subscription information of the first operator network, so that the remote management platform of the first operator network performs verification on the UE, and returns a verification result; and
receiving the verification result.

7. The method according to claim 4, wherein the sending an indication message to the eUICC through the UE according to the verification result, so as to instruct the eUICC whether to allow a handover to a second operator network comprises:
when the verification result indicates that the verification succeeds, sending the indication message to the eUICC by using the UE, so as to instruct the eUICC to perform a handover to the second operator network; or
when the verification result indicates that the verification fails, and the UE is an unauthorized device or the eUICC is an unauthorized eUICC, sending the indication message to the eUICC through the UE, so that the eUICC locks itself, and the eUICC sends no handover instruction to the UE, or the eUICC instructs the UE not to perform a handover to the second operator network; or
when the verification result indicates that the verification fails, and the UE is in arrears, sending the indication message to the eUICC through the UE to indicate that the UE is in arrears, so that the eUICC sends no handover instruction to the UE, or the eUICC instructs the UE not to perform a handover to the second operator network.

8. An embedded universal integrated circuit card for a handover between a first and a second operator network, comprising:
a sending module (71), configured to send (204, 304) a request message to a remote management platform of the second operator network through a user equipment, UE, when the embedded universal integrated circuit card eUICC, which is disposed in the UE, learns (202, 302) that the UE needs to perform a handover from the first operator network to the second operator network, wherein the request message carries an identity of the eUICC, so that the remote management platform of the second operator network performs verification on the eUICC according to at least the identity, and sends an indication message to the eUICC through the UE according to a verification result;
a receiving module (72), configured to receive the indication message; and
a handover module (73), configured to instruct, according to the indication message, the UE to perform or not perform a handover to the second operator network;
wherein the embedded universal integrated circuit card further comprises:
a determining module (74), configured to determine whether subscription information of the second operator network is stored in the eUICC, wherein the subscription information of the second operator network is subscription information between the UE and the second operator network and is a basis for determining whether the UE has subscribed to the second operator network; wherein:
correspondingly, the sending module is further configured to, when the subscription information of the second operator network is stored in the eUICC, send (304) a first request message to the remote management platform of the second operator network through the UE, wherein the first request message is used to request a handover to the second operator network, and the first request message carries the identity of the eUICC; and
the sending module is further configured to, when the subscription information of the second operator network is not stored in the eUICC, send (204) a second request message to the remote management platform of the second operator network through the UE, wherein the second request message is used to request acquisition of the subscription information of the second operator network, and the second request message carries the identity of the eUICC.

9. The embedded universal integrated circuit card according to claim 8, wherein the handover module is specifically configured to, when the indication message indicates that the eUICC verification fails, send no handover instruction to the UE, or instruct the UE not to perform a handover to the second operator network; or
when the indication message indicates that the eUICC verification succeeds, instruct the UE to perform a handover to the second operator network.

10. The embedded universal integrated circuit card according to claim 9, wherein the handover module is further specifically configured to, when the indication message indicates locking of the eUICC, lock the eUICC, and send no handover instruction to the UE or instruct the UE not to perform a handover to the second operator network; or
when the indication message indicates that the eUICC is in arrears, send no handover instruction to the UE, or instruct the UE not to perform a handover to the second operator network.

11. A remote management platform of a second operator network for a handover between a first and a second operator network, comprising:
a receiving module (81), configured to receive by the remote management platform of the second operator network a request message sent through a user equipment, UE, by an embedded universal integrated circuit card eUICC disposed in the UE, wherein the request message carries an identity of the eUICC, so that the remote management platform of the second operator network performs verification on the eUICC according to at least the identity; further wherein the request message is a first request message which is used to request a handover to the second operator network if the subscription information of the second operator network is stored in the eUICC, or further wherein the request message is a second request message which is used to request acquisition of the subscription information of the second operator network if the subscription information of the second operator network is not stored in the eUICC; wherein the subscription information of the second operator network is subscription information between the UE and the second operator network and is a basis for determining whether the UE has subscribed to the second operator network;
a verifying module (82), configured to perform (208, 308) verification on the eUICC according to at least the identity to acquire a verification result; and
a sending module (83), configured to send (211, 311) an indication message to the eUICC through the UE according to the verification result, so as to instruct the UE according to the indication message whether to perform or not perform a handover to a second operator networks for the UE, wherein if the request message is the first request message, the indication message carries acquired subscription information of the second operator network, and wherein if the request message is the second request message, the indication message carries acquired subscription information of the second operator network and related configuration information of the second operator network.

12. The remote management platform according to claim 11, wherein the verifying module is specifically configured to, when the request message sent by the UE is received, acquire subscription information of a first operator network from the eUICC;
the verifying module is further configured to send, according to the acquired subscription information of the first operator network, a verification request message to the first operator network corresponding to the subscription information of the first operator network, wherein the verification request message carries the identity of the eUICC, so that the first operator network performs verification on the UE according to the identity of the eUICC, and returns a verification result; and
correspondingly, the receiving module is further configured to receive the verification result.

13. The remote management platform according to claim 11, wherein the verifying module is specifically configured to, when a request message sent by the eUICC is received, acquire information about a remote management platform corresponding to subscription information of a first operator network from the eUICC;
the verifying module is further configured to send a verification request message to the remote management platform of the first operator network according to the information about the remote management platform corresponding to the subscription information of the first operator network, so that the remote management platform of the first operator network performs verification on the UE, and returns a verification result; and
correspondingly, the receiving module is configured to receive the verification result.

14. The remote management platform according to claim 11, wherein the sending module is specifically configured to, when the verification result indicates that the verification succeeds, send the indication message to the eUICC through the UE, so as to instruct the eUICC to perform a handover to the second operator network; or
when the verification result indicates that the verification fails, and the UE is an unauthorized device or the eUICC is an unauthorized eUICC, send the indication message to the eUICC through the UE, so that the eUICC locks itself, and the eUICC sends no handover instruction to the UE, or the eUICC instructs the UE not to perform a handover to the second operator network; or
when the verification result indicates that the verification fails, and the UE is in arrears, send the indication message to the eUICC through the UE to indicate that the UE is in arrears, so that the eUICC sends no handover instruction to the UE, or the eUICC instructs the UE not to perform a handover to the second operator network

## Patentansprüche

1. Verfahren, das durch eine eingebettete universelle Karte mit integrierter Schaltung ("embedded Universal Integrated Circuit Card", eUICC) ausgeführt wird, für eine Übergabe zwischen einem ersten und einem zweiten Betreibernetzwerk, umfassend:
Senden (204, 304), durch die in einer Benutzerausrüstung ("User Equipment", UE) angeordnete eUICC, einer Anforderungsnachricht zu einer Fernverwaltungsplattform eines zweiten Betreibernetzwerks durch die UE, wenn die eUICC feststellt (202, 302), dass die UE eine Übergabe von dem ersten Betreibernetzwerk zu dem zweiten Betreibernetzwerk durchführen muss, wobei die Anforderungsnachricht eine Identität der eUICC enthält, sodass die Fernverwaltungsplattform des zweiten Betreibernetzwerks eine Überprüfung an der eUICC gemäß zu mindest der Identität durchführt und durch die UE gemäß einem Überprüfungsergebnis eine Hinweisnachricht zu der eUICC sendet; und
Empfangen, durch die eUICC, der Hinweisnachricht und Anweisen, gemäß der Hinweisnachricht, der UE, eine Übergabe zu dem zweiten Betreibernetzwerk durchzuführen oder nicht durchzuführen;
wobei das Senden (204, 304), durch die in der UE angeordnete eUICC, einer Anforderungsnachricht zu einer Fernverwaltungsplattform eines zweiten Betreibernetzwerks durch die UE, wenn die eUICC feststellt (202, 302), dass die UE eine Übergabe von einem ersten Betreibernetzwerk zu dem zweiten Betreibernetzwerk durchführen muss, Folgendes umfasst:
Bestimmen, durch die eUICC, ob Subskriptionsinformationen des zweiten Betreibernetzwerks in der eUICC gespeichert sind, wobei die Subskriptionsinformationen des zweiten Betreibernetzwerks Subskriptionsinformationen zwischen der UE und dem zweiten Betreibernetzwerk sind und eine Grundlage für das Bestimmen sind, ob die UE zu dem zweiten Betreibernetzwerk subskribiert; und,
wenn die Subskriptionsinformationen des zweiten Betreibernetzwerks in der eUICC gespeichert sind, Senden (304), durch die in der UE angeordnete eUICC, einer ersten Anforderungsnachricht zu der Fernverwaltungsplattform des zweiten Betreibernetzwerks durch die UE, wobei die erste Anforderungsnachricht verwendet wird, um eine Übergabe zu dem zweiten Betreibernetzwerk anzufordern, und die erste Anforderungsnachricht die Identität der eUICC enthält; und,
wenn die Subskriptionsinformationen des zweiten Betreibernetzwerks nicht in der eUICC gespeichert sind, Senden (204), durch die in der UE angeordnete eUICC, einer zweiten Anforderungsnachricht zu der Fernverwaltungsplattform des zweiten Betreibernetzwerks durch die UE, wobei die zweite Anforderungsnachricht verwendet wird, um eine Erfassung der Subskriptionsinformationen des zweiten Betreibernetzwerks anzufordern, und die zweite Anforderungsnachricht die Identität der eUICC enthält.

2. Verfahren nach Anspruch 1, wobei das Empfangen, durch die eUICC, der Hinweisnachricht, und das Anweisen, gemäß der Hinweisnachricht, der UE, eine Übergabe zu dem zweiten Betreibernetzwerk durchzuführen oder nicht durchzuführen, Folgendes umfasst:
Empfangen, durch die eUICC, der Hinweisnachricht und, wenn die Hinweisnachricht anzeigt, dass die eUICC-Überprüfung fehlschlägt, Senden, durch die eUICC, von keiner Übergabeanweisung zu der UE, oder Anweisen, durch die eUICC, der UE, eine Übergabe zu dem zweiten Betreibernetzwerk nicht durchzuführen; oder
Empfangen, durch die eUICC, der Hinweisnachricht und, wenn die Hinweisnachricht anzeigt, dass die eUICC-Überprüfung erfolgreich ist, Anweisen, durch die eUICC, der UE, eine Übergabe zu dem zweiten Betreibernetzwerk durchzuführen.

3. Verfahren nach Anspruch 2, wobei, wenn die Hinweisnachricht anzeigt, dass die eUICC-Überprüfung fehlschlägt, das Senden, durch die eUICC, von keiner Übergabeanweisung zu der UE, oder das Anweisen, durch die eUICC, der UE, eine Übergabe zu dem zweiten Betreibernetzwerk nicht durchzuführen, Folgendes umfasst:
wenn die Hinweisnachricht ein Sperren der eUICC anzeigt, Sperren, durch die eUICC, der eUICC, und Senden, durch die eUICC, von keiner Übergabeanweisung zu der UE, oder Anweisen, durch die eUICC, der UE, eine Übergabe zu dem zweiten Betreibernetzwerk nicht durchzuführen; oder,
wenn die Hinweisnachricht anzeigt, dass die UE im Rückstand ist, Senden, durch die eUICC, von keiner Übergabeanweisung zu der UE, oder Anweisen, durch die eUICC, der UE, eine Übergabe zu dem zweiten Betreibernetzwerk nicht durchzuführen.

4. Verfahren, das durch eine Fernverwaltungsplattform eines zweiten Betreibernetzwerks ausgeführt wird, für eine Übergabe zwischen einem ersten und dem zweiten Betreibernetzwerk, umfassend:
Empfangen, durch die Fernverwaltungsplattform des zweiten Betreibernetzwerks, einer Anforderungsnachricht, die durch eine UE durch eine in der UE angeordnete eingebettete universelle Karte mit integrierter Schaltung ("embedded Universal Integrated Circuit Card", eUICC) gesendet wird, wobei die Anforderungsnachricht eine Identität der eUICC enthält, sodass die Fernverwaltungsplattform des zweiten Betreibernetzwerks eine Überprüfung an der eUICC gemäß zu mindest der Identität durchführt; wobei ferner die Anforderungsnachricht eine erste Anforderungsnachricht ist, die verwendet wird, um eine Übergabe zu dem zweiten Betreibernetzwerk anzufordern, wenn die Subskriptionsinformationen des zweiten Betreibernetzwerks in der eUICC gespeichert sind, oder wobei ferner die Anforderungsnachricht eine zweite Anforderungsnachricht ist, die verwendet wird, um eine Erfassung der Subskriptionsinformationen des zweiten Betreibernetzwerks anzufordern, wenn die Subskriptionsinformationen des zweiten Betreibernetzwerks nicht in der eUICC gespeichert sind, wobei die Subskriptionsinformationen des zweiten Betreibernetzwerks Subskriptionsinformationen zwischen der UE und dem zweiten Betreibernetzwerk sind und eine Grundlage für das Bestimmen sind, ob die UE zu dem zweiten Betreibernetzwerk subskribiert;
Durchführen (208, 308) einer Überprüfung an der eUICC gemäß zu mindest der Identität der eUICC, um ein Überprüfungsergebnis zu erfassen; und
Senden (211, 311) einer Hinweisnachricht zu der eUICC durch die UE gemäß dem Überprüfungsergebnis, um die UE gemäß der Hinweisnachricht anzuweisen, ob eine Übergabe zu einem zweiten Betreibernetzwerk durchzuführen ist oder nicht durchzuführen ist, wobei, wenn die Anforderungsnachricht die erste Anforderungsnachricht ist, die Hinweisnachricht erfasste Subskriptionsinformationen des zweiten Betreibernetzwerks enthält, und wobei, wenn die Anforderungsnachricht die zweite Anforderungsnachricht ist, die Hinweisnachricht erfasste Subskriptionsinformationen des zweiten Betreibernetzwerks und zugehörige Konfigurationsinformationen des zweiten Betreibernetzwerks enthält.

5. Verfahren nach Anspruch 4, wobei das Durchführen einer Überprüfung an der eUICC gemäß der Identität der eUICC, um ein Überprüfungsergebnis zu erfassen, Folgendes umfasst:
beim Empfangen der durch die eUICC gesendeten Anforderungsnachricht, Erfassen von Subskriptionsinformationen eines ersten Betreibernetzwerks von der eUICC;
Senden, gemäß den erfassten Subskriptionsinformationen des ersten Betreibernetzwerks, einer Überprüfungsanforderungsnachricht zu dem ersten Betreibernetzwerk entsprechend den Subskriptionsinformationen des ersten Betreibernetzwerks, wobei die Überprüfungsanforderungsnachricht die Identität der eUICC enthält, sodass das erste Betreibernetzwerk eine Überprüfung an der UE gemäß der Identität der eUICC durchführt und ein Überprüfungsergebnis zurückgibt; und
Empfangen des Überprüfungsergebnisses.

6. Verfahren nach Anspruch 4, wobei das Durchführen einer Überprüfung an der eUICC gemäß der Identität der eUICC, um ein Überprüfungsergebnis zu erfassen, Folgendes umfasst:
beim Empfangen der durch die eUICC gesendeten Anforderungsnachricht, Erfassen von Informationen über eine Fernverwaltungsplattform entsprechend Subskriptionsinformationen des ersten Betreibernetzwerks von der eUICC;
Senden einer Überprüfungsanforderungsnachricht zu der Fernverwaltungsplattform des ersten Betreibernetzwerks gemäß den Informationen über die Fernverwaltungsplattform entsprechend den Subskriptionsinformationen des ersten Betreibernetzwerks, sodass die Fernverwaltungsplattform des ersten Betreibernetzwerks eine Überprüfung an der UE durchführt und ein Überprüfungsergebnis zurückgibt; und
Empfangen des Überprüfungsergebnisses.

7. Verfahren nach Anspruch 4, wobei das Senden einer Hinweisnachricht zu der eUICC durch die UE gemäß dem Überprüfungsergebnis, um die eUICC anzuweisen, ob eine Übergabe zu einem zweiten Betreibernetzwerk zu erlauben ist, Folgendes umfasst:
wenn das Überprüfungsergebnis anzeigt, dass die Überprüfung erfolgreich ist, Senden der Hinweisnachricht zu der eUICC unter Verwendung der UE, um die eUICC anzuweisen, eine Übergabe zu dem zweiten Betreibernetzwerk durchzuführen; oder,
wenn das Überprüfungsergebnis anzeigt, dass die Überprüfung fehlschlägt, und die UE eine nicht autorisierte Vorrichtung ist oder die eUICC eine nicht autorisierte eUICC ist, Senden der Hinweisnachricht zu der eUICC durch die UE, sodass sich die eUICC selbst sperrt und die eUICC keine Übergabeanweisung zu der UE sendet oder die eUICC die UE anweist, eine Übergabe zu dem zweiten Betreibernetzwerk nicht durchzuführen; oder,
wenn das Überprüfungsergebnis anzeigt, dass die Überprüfung fehlschlägt, und die UE im Rückstand ist, Senden der Hinweisnachricht zu der eUICC durch die UE, um anzuzeigen, dass die UE im Rückstand ist, sodass die eUICC keine Übergabeanweisung zu der UE sendet, oder die eUICC die UE anweist, eine Übergabe zu dem zweiten Betreibernetzwerk nicht durchzuführen.

8. Eingebettete universelle Karte mit integrierter Schaltung für eine Übergabe zwischen einem ersten und einem zweiten Betreibernetzwerk, umfassend:
ein Sendemodul (71), das dazu konfiguriert ist, eine Anforderungsnachricht zu einer Fernverwaltungsplattform des zweiten Betreibernetzwerks durch eine Benutzerausrüstung ("User Equipment", UE) zu senden (204, 304), wenn die in der UE angeordnete eingebettete universelle Karte mit integrierter Schaltung ("embedded Universal Integrated Circuit Card", eUICC) feststellt (202, 302), dass die UE eine Übergabe von dem ersten Betreibernetzwerk zu dem zweiten Betreibernetzwerk durchführen muss, wobei die Anforderungsnachricht eine Identität der eUICC enthält, sodass die Fernverwaltungsplattform des zweiten Betreibernetzwerks eine Überprüfung an der eUICC gemäß zu mindest der Identität durchführt und eine Hinweisnachricht zu der eUICC durch die UE gemäß einem Überprüfungsergebnis sendet;
ein Empfangsmodul (72), das dazu konfiguriert ist, die Hinweisnachricht zu empfangen; und
ein Übergabemodul (73), das dazu konfiguriert ist, gemäß der Hinweisnachricht, die UE anzuweisen, eine Übergabe zu dem zweiten Betreibernetzwerk durchzuführen oder nicht durchzuführen;
wobei die eingebettete universelle Karte mit integrierter Schaltung ferner Folgendes umfasst:
ein Bestimmungsmodul (74), das dazu konfiguriert ist, zu bestimmen, ob Subskriptionsinformationen des zweiten Betreibernetzwerks in der eUICC gespeichert sind, wobei die Subskriptionsinformationen des zweiten Betreibernetzwerks Subskriptionsinformationen zwischen der UE und dem zweiten Betreibernetzwerk sind und eine Grundlage für das Bestimmen sind, ob die UE zu dem zweiten Betreibernetzwerk subskribiert; wobei:
das Sendemodul entsprechend ferner dazu konfiguriert ist, wenn die Subskriptionsinformationen des zweiten Betreibernetzwerks in der eUICC gespeichert sind, eine erste Anforderungsnachricht zu der Fernverwaltungsplattform des zweiten Betreibernetzwerks durch die UE zu senden (304), wobei die erste Anforderungsnachricht verwendet wird, um eine Übergabe zu dem zweiten Betreibernetzwerk anzufordern, und die erste Anforderungsnachricht die Identität der eUICC enthält; und
das Sendemodul ferner dazu konfiguriert ist, wenn die Subskriptionsinformationen des zweiten Betreibernetzwerks nicht in der eUICC gespeichert sind, eine zweite Anforderungsnachricht zu der Fernverwaltungsplattform des zweiten Betreibernetzwerks durch die UE zu senden (204), wobei die zweite Anforderungsnachricht verwendet wird, um eine Erfassung der Subskriptionsinformationen des zweiten Betreibernetzwerks anzufordern, und die zweite Anforderungsnachricht die Identität der eUICC enthält.

9. Eingebettete universelle Karte mit integrierter Schaltung nach Anspruch 8, wobei das Übergabemodul insbesondere dazu konfiguriert ist, wenn die Hinweisnachricht anzeigt, dass die eUICC-Überprüfung fehlschlägt, keine Übergabeanweisung zu der UE zu senden, oder die UE anzuweisen, eine Übergabe zu dem zweiten Betreibernetzwerk nicht durchzuführen; oder,
wenn die Hinweisnachricht anzeigt, dass die eUICC-Überprüfung erfolgreich ist, die UE anzuweisen, eine Übergabe zu dem zweiten Betreibernetzwerk durchzuführen.

10. Eingebettete universelle Karte mit integrierter Schaltung nach Anspruch 9, wobei das Übergabemodul ferner insbesondere dazu konfiguriert ist, wenn die Hinweisnachricht ein Sperren der eUICC anzeigt, die eUICC zu sperren und keine Übergabeanweisung zu der UE zu senden oder die UE anzuweisen, eine Übergabe zu dem zweiten Betreibernetzwerk nicht durchzuführen; oder,
wenn die Hinweisnachricht anzeigt, dass die eUICC im Rückstand ist, keine Übergabeanweisung zu der UE zu senden oder die UE anzuweisen, eine Übergabe zu dem zweiten Betreibernetzwerk nicht durchzuführen.

11. Fernverwaltungsplattform eines zweiten Betreibernetzwerks für eine Übergabe zwischen einem ersten und einem zweiten Betreibernetzwerk, umfassend:
ein Empfangsmodul (81), das dazu konfiguriert ist, durch die Fernverwaltungsplattform des zweiten Betreibernetzwerks, eine durch eine Benutzerausrüstung ("User Equipment", UE) durch eine in der UE angeordnete eingebettete universelle Karte mit integrierter Schaltung ("embedded Universal Integrated Circuit Card", eUICC) gesendete Anforderungsnachricht zu empfangen, wobei die Anforderungsnachricht eine Identität der eUICC enthält, sodass die Fernverwaltungsplattform des zweiten Betreibernetzwerks eine Überprüfung an der eUICC gemäß zumindest der Identität durchführt; wobei ferner die Anforderungsnachricht eine erste Anforderungsnachricht ist, die verwendet wird, um eine Übergabe zu dem zweiten Betreibernetzwerk anzufordern, wenn die Subskriptionsinformationen des zweiten Betreibernetzwerks in der eUICC gespeichert sind, oder wobei ferner die Anforderungsnachricht eine zweite Anforderungsnachricht ist, die verwendet wird, um eine Erfassung der Subskriptionsinformationen des zweiten Betreibernetzwerks anzufordern, wenn die Subskriptionsinformationen des zweiten Betreibernetzwerks nicht in der eUICC gespeichert sind;
wobei die Subskriptionsinformationen des zweiten Betreibernetzwerks Subskriptionsinformationen zwischen der UE und dem zweiten Betreibernetzwerk sind und eine Grundlage für das Bestimmen sind, ob die UE zu dem zweiten Betreibernetzwerk subskribiert;
ein Überprüfungsmodul (82), das dazu konfiguriert ist, eine Überprüfung an der eUICC gemäß zumindest der Identität durchzuführen (208, 308), um ein Überprüfungsergebnis zu erfassen; und
ein Sendemodul (83), das dazu konfiguriert ist, eine Hinweisnachricht zu der eUICC durch die UE gemäß dem Überprüfungsergebnis zu senden (211, 311), um die UE gemäß der Hinweisnachricht anzuweisen, ob eine Übergabe zu einem zweiten Betreibernetzwerk für die UE durchzuführen ist oder nicht durchzuführen ist, wobei, wenn die Anforderungsnachricht die erste Anforderungsnachricht ist, die Hinweisnachricht erfasste Subskriptionsinformationen des zweiten Betreibernetzwerks enthält, und wobei, wenn die Anforderungsnachricht die zweite Anforderungsnachricht ist, die Hinweisnachricht erfasste Subskriptionsinformationen des zweiten Betreibernetzwerks und zugehörige Konfigurationsinformationen des zweiten Betreibernetzwerks enthält.

12. Fernverwaltungsplattform nach Anspruch 11, wobei das Überprüfungsmodul insbesondere dazu konfiguriert ist, wenn die durch die UE gesendete Anforderungsnachricht empfangen wird, Subskriptionsinformationen eines ersten Betreibernetzwerks von der eUICC zu erfassen;
das Überprüfungsmodul ferner dazu konfiguriert ist, gemäß den erfassten Subskriptionsinformationen des ersten Betreibernetzwerks, eine Überprüfungsanforderungsnachricht zu dem ersten Betreibernetzwerk entsprechend den Subskriptionsinformationen des ersten Betreibernetzwerks zu senden, wobei die Überprüfungsanforderungsnachricht die Identität der eUICC enthält, sodass das erste Betreibernetzwerk eine Überprüfung an der UE gemäß der Identität der eUICC durchführt und ein Überprüfungsergebnis zurückgibt; und
das Empfangsmodul entsprechend ferner dazu konfiguriert ist, das Überprüfungsergebnis zu empfangen.

13. Fernverwaltungsplattform nach Anspruch 11, wobei das Überprüfungsmodul insbesondere dazu konfiguriert ist, wenn eine durch die eUICC gesendete Anforderungsnachricht empfangen wird, Informationen über eine Fernverwaltungsplattform entsprechend Subskriptionsinformationen eines ersten Betreibernetzwerks von der eUICC zu erfassen;
das Überprüfungsmodul ferner dazu konfiguriert ist, eine Überprüfungsanforderungsnachricht zu der Fernverwaltungsplattform des ersten Betreibernetzwerks gemäß den Informationen über die Fernverwaltungsplattform entsprechend den Subskriptionsinformationen des ersten Betreibernetzwerks zu senden, sodass die Fernverwaltungsplattform des ersten Betreibernetzwerks eine Überprüfung an der UE durchführt und ein Überprüfungsergebnis zurückgibt; und das Empfangsmodul entsprechend dazu konfiguriert ist, das Überprüfungsergebnis zu empfangen.

14. Fernverwaltungsplattform nach Anspruch 11, wobei das Sendemodul insbesondere dazu konfiguriert ist, wenn das Überprüfungsergebnis anzeigt, dass die Überprüfung erfolgreich ist, die Hinweisnachricht zu der eUICC durch die UE zu senden, um die eUICC anzuweisen, eine Übergabe zu dem zweiten Betreibernetzwerk durchzuführen; oder,
wenn das Überprüfungsergebnis anzeigt, dass die Überprüfung fehlschlägt, und die UE eine nicht autorisierte Vorrichtung ist oder die eUICC eine nicht autorisierte eUICC ist, die Hinweisnachricht zu der eUICC durch die UE zu senden, sodass sich die eUICC selbst sperrt und die eUICC keine Übergabeanweisung zu der UE sendet oder die eUICC die UE anweist, eine Übergabe zu dem zweiten Betreibernetzwerk nicht durchzuführen; oder,
wenn das Überprüfungsergebnis anzeigt, dass die Überprüfung fehlschlägt, und die UE im Rückstand ist, die Hinweisnachricht zu der eUICC durch die UE zu senden, um anzuzeigen, dass die UE im Rückstand ist, sodass die eUICC keine Übergabeanweisung zu der UE sendet, oder die eUICC die UE anweist, eine Übergabe zu dem zweiten Betreibernetzwerk nicht durchzuführen.

## Revendications

1. Procédé exécuté par une carte à puce électronique universelle intégrée, eUICC, pour un transfert intercellulaire entre un premier et un second réseau d'opérateur, consistant :
à envoyer (204, 304), au moyen de la carte eUICC, qui est disposée dans un équipement utilisateur, UE, un message de demande à une plate-forme de gestion à distance d'un second réseau d'opérateur au moyen de l'équipement utilisateur lorsque la carte eUICC apprend (202, 302) que l'équipement utilisateur doit effectuer un transfert intercellulaire du premier réseau d'opérateur au second réseau d'opérateur, dans lequel le message de demande comporte une identité de la carte eUICC de telle sorte que la plate-forme de gestion à distance du second réseau d'opérateur effectue une vérification concernant la carte eUICC selon au moins l'identité, et envoie un message d'indication à la carte eUICC au moyen de l'équipement utilisateur en fonction d'un résultat de vérification ; et
à recevoir, au moyen de la carte eUICC, le message d'indication, et à donner comme instruction, en fonction du message d'indication, à l'équipement utilisateur d'effectuer, ou de ne pas effectuer, un transfert intercellulaire au second réseau d'opérateur ;
dans lequel l'envoi (204, 304), au moyen de la carte eUICC disposée dans l'équipement utilisateur, d'un message de demande à une plate-forme de gestion à distance d'un second réseau d'opérateur au moyen de l'équipement utilisateur lorsque la carte eUICC apprend (202, 302) que l'équipement utilisateur doit effectuer un transfert intercellulaire d'un premier réseau d'opérateur au second réseau d'opérateur, consiste :
à déterminer, au moyen de la carte eUICC, si des informations d'abonnement du second réseau d'opérateur sont stockées ou non dans la carte eUICC, dans lequel les informations d'abonnement du second réseau d'opérateur sont des informations d'abonnement entre l'équipement utilisateur et le second réseau d'opérateur et sont une base pour déterminer si l'équipement utilisateur est abonné ou non au second réseau d'opérateur ; et
si les informations d'abonnement du second réseau d'opérateur sont stockées dans la carte eUICC, à envoyer (304), au moyen de la carte eUICC disposée dans l'équipement utilisateur, un premier message de demande à la plate-forme de gestion à distance du second réseau d'opérateur au moyen de l'équipement utilisateur, dans lequel le premier message de demande est utilisé pour demander un transfert intercellulaire au second réseau d'opérateur, et le premier message de demande comporte l'identité de la carte eUICC ; et
si les informations d'abonnement du second réseau d'opérateur ne sont pas stockées dans la carte eUICC, à envoyer (204), au moyen de la carte eUICC disposée dans l'équipement utilisateur, un second message de demande à la plate-forme de gestion à distance du second réseau d'opérateur au moyen de l'équipement utilisateur, dans lequel le second message de demande est utilisé pour demander l'acquisition des informations d'abonnement du second réseau d'opérateur, et le second message de demande comporte l'identité de la carte eUICC.

2. Procédé selon la revendication 1, dans lequel la réception, au moyen de la carte eUICC, du message d'indication, et l'instruction, en fonction du message d'indication, à l'équipement utilisateur d'effectuer, ou de ne pas effectuer, un transfert intercellulaire au second réseau d'opérateur consistent :
à recevoir, au moyen de la carte eUICC, le message d'indication et, lorsque le message d'indication indique que la vérification de la carte eUICC a échoué, à ne pas envoyer, au moyen de la carte eUICC, une instruction de transfert intercellulaire à l'équipement utilisateur, ou à donner comme instruction, au moyen de la carte eUICC, à l'équipement utilisateur de ne pas effectuer un transfert intercellulaire au second réseau d'opérateur ; ou
à recevoir, au moyen de la carte eUICC, le message d'indication et, lorsque le message d'indication indique que la vérification de la carte eUICC a réussi, à donner comme instruction, au moyen de la carte eUICC, à l'équipement utilisateur d'effectuer un transfert intercellulaire au second réseau d'opérateur.

3. Procédé selon la revendication 2, dans lequel, lorsque le message d'indication indique que la vérification de la carte eUICC a échoué, l'envoi, au moyen de la carte eUICC, d'aucune instruction de transfert intercellulaire à l'équipement utilisateur, ou l'instruction, au moyen de la carte eUICC, à l'équipement utilisateur de ne pas effectuer un transfert intercellulaire au second réseau d'opérateur consiste :
lorsque le message d'indication indique le verrouillage de la carte eUICC, à verrouiller, au moyen de la carte eUICC, la carte eUICC et à ne pas envoyer, au moyen de la carte eUICC, une instruction de transfert intercellulaire à l'équipement utilisateur, ou à donner comme instruction, au moyen de la carte eUICC, à l'équipement utilisateur de ne pas effectuer un transfert intercellulaire au second réseau d'opérateur ; ou
lorsque le message d'indication indique que l'équipement utilisateur présente des arriérés de paiement, à ne pas envoyer, au moyen de la carte eUICC, une instruction de transfert intercellulaire à l'équipement utilisateur, ou à donner comme instruction, au moyen de la carte eUICC, à l'équipement utilisateur de ne pas effectuer un transfert intercellulaire au second réseau d'opérateur.

4. Procédé exécuté par une plate-forme de gestion à distance d'un second réseau d'opérateur pour un transfert intercellulaire entre un premier et le second réseau d'opérateur, consistant :
à recevoir, au moyen de la plate-forme de gestion à distance du second réseau d'opérateur, un message de demande qui est envoyé, au moyen d'un équipement utilisateur, par une carte à puce électronique universelle intégrée, eUICC, disposée dans l'équipement utilisateur, dans lequel le message de demande comporte une identité de la carte eUICC de telle sorte que la plate-forme de gestion à distance du second réseau d'opérateur effectue une vérification concernant la carte eUICC selon au moins l'identité ; en outre dans lequel le message de demande est un premier message de demande qui est utilisé pour demander un transfert intercellulaire au second réseau d'opérateur si les informations d'abonnement du second réseau d'opérateur sont stockées dans la carte eUICC ou en outre dans lequel le message de demande est un second message de demande qui est utilisé pour demander l'acquisition des informations d'abonnement du second réseau d'opérateur si les informations d'abonnement du second réseau d'opérateur ne sont pas stockées dans la carte eUICC, dans lequel les informations d'abonnement du second réseau d'opérateur sont des informations d'abonnement entre l'équipement utilisateur et le second réseau d'opérateur et sont une base pour déterminer si l'équipement utilisateur est abonné ou non au second réseau d'opérateur ;
à effectuer (208, 308) une vérification concernant la carte eUICC en fonction d'au moins l'identité de la carte eUICC pour acquérir un résultat de vérification ; et
à envoyer (211, 311) un message d'indication à la carte eUICC au moyen de l'équipement utilisateur en fonction du résultat de vérification de sorte à donner comme instruction à l'équipement utilisateur, en fonction du message d'indication, d'effectuer, ou de ne pas effectuer, un transfert intercellulaire à un second réseau d'opérateur, dans lequel, si le message de demande est le premier message de demande, le message d'indication comporte des informations d'abonnement acquises du second réseau d'opérateur et dans lequel, si le message de demande est le second message de demande, le message d'indication comporte des informations d'abonnement acquises du second réseau d'opérateur ainsi que des informations de configuration associées du second réseau d'opérateur.

5. Procédé selon la revendication 4, dans lequel la réalisation d'une vérification concernant la carte eUICC en fonction de l'identité de la carte eUICC pour acquérir un résultat de vérification consiste :
lors de la réception du message de demande envoyé par la carte eUICC, à acquérir des informations d'abonnement d'un premier réseau d'opérateur en provenance de la carte eUICC ;
à envoyer, en fonction des informations d'abonnement acquises du premier réseau d'opérateur, un message de demande de vérification au premier réseau d'opérateur correspondant aux informations d'abonnement du premier réseau d'opérateur, dans lequel le message de demande de vérification comporte l'identité de la carte eUICC de telle sorte que le premier réseau d'opérateur effectue une vérification concernant l'équipement utilisateur en fonction de l'identité de la carte eUICC, et renvoie un résultat de vérification ; et
à recevoir le résultat de vérification.

6. Procédé selon la revendication 4, dans lequel la réalisation d'une vérification concernant la carte eUICC en fonction de l'identité de la carte eUICC pour acquérir un résultat de vérification consiste :
lors de la réception du message de demande envoyé par la carte eUICC, à acquérir des informations concernant une plate-forme de gestion à distance correspondant à des informations d'abonnement du premier réseau d'opérateur en provenance de la carte eUICC ;
à envoyer un message de demande de vérification à la plate-forme de gestion à distance du premier réseau d'opérateur en fonction des informations concernant la plate-forme de gestion à distance correspondant aux informations d'abonnement du premier réseau d'opérateur de telle sorte que la plate-forme de gestion à distance du premier réseau d'opérateur effectue une vérification concernant l'équipement utilisateur et renvoie un résultat de vérification ; et
à recevoir le résultat de vérification.

7. Procédé selon la revendication 4, dans lequel l'envoi d'un message d'indication à la carte eUICC au moyen de l'équipement utilisateur en fonction du résultat de vérification de sorte à donner comme instruction à la carte eUICC de permettre ou non un transfert intercellulaire à un second réseau d'opérateur consiste :
lorsque le résultat de vérification indique que la vérification a réussi, à envoyer le message d'indication à la carte eUICC en utilisant l'équipement utilisateur de sorte à donner comme instruction à la carte eUICC de réaliser un transfert intercellulaire au second réseau d'opérateur ; ou
lorsque le résultat de vérification indique que la vérification a échoué et que l'équipement utilisateur est un dispositif non autorisé ou que la carte eUICC est une carte eUICC non autorisée, à envoyer le message d'indication à la carte eUICC au moyen de l'équipement utilisateur de telle sorte que la carte eUICC se verrouille elle-même, et la carte eUICC n'envoie aucune instruction de transfert intercellulaire à l'équipement utilisateur ou la carte eUICC donne comme instruction à l'équipement utilisateur de ne pas effectuer un transfert intercellulaire au second réseau d'opérateur ; ou
lorsque le résultat de vérification indique que la vérification a échoué et que l'équipement utilisateur présente des arriérés de paiement, à envoyer le message d'indication à la carte eUICC au moyen de l'équipement utilisateur pour indiquer que l'équipement utilisateur présente des arriérés de paiement de telle sorte que la carte eUICC n'envoie aucune instruction de transfert intercellulaire à l'équipement utilisateur ou que la carte eUICC donne comme instruction à l'équipement utilisateur de ne pas effectuer un transfert intercellulaire au second réseau d'opérateur.

8. Carte à puce électronique universelle intégrée pour un transfert intercellulaire entre un premier et un second réseau d'opérateur, comprenant :
un module d'envoi (71), configuré pour envoyer (204, 304) un message de demande à une plate-forme de gestion à distance du second réseau d'opérateur au moyen d'un équipement utilisateur, UE, lorsque la carte à puce électronique universelle intégrée, eUICC, qui est disposée dans l'équipement utilisateur, apprend (202, 302) que l'équipement utilisateur doit effectuer un transfert intercellulaire du premier réseau d'opérateur au second réseau d'opérateur, dans laquelle le message de demande comporte une identité de la carte eUICC de telle sorte que la plate-forme de gestion à distance du second réseau d'opérateur effectue une vérification concernant la carte eUICC selon au moins l'identité, et envoie un message d'indication à la carte eUICC au moyen de l'équipement utilisateur en fonction d'un résultat de vérification ;
un module de réception (72), configuré pour recevoir le message d'indication ; et
un module de transfert intercellulaire (73), configuré pour donner comme instruction, en fonction du message d'indication, à l'équipement utilisateur d'effectuer, ou de ne pas effectuer, un transfert intercellulaire au second réseau d'opérateur ;
dans laquelle la carte à puce électronique universelle intégrée comprend en outre :
un module de détermination (74), configuré pour déterminer si des informations d'abonnement du second réseau d'opérateur sont stockées ou non dans la carte eUICC, dans laquelle les informations d'abonnement du second réseau d'opérateur sont des informations d'abonnement entre l'équipement utilisateur et le second réseau d'opérateur et sont une base pour déterminer si l'équipement utilisateur est abonné au second réseau d'opérateur ou non ; dans laquelle :
en conséquence, le module d'envoi est en outre configuré, lorsque les informations d'abonnement du second réseau d'opérateur sont stockées dans la carte eUICC, pour envoyer (304) un premier message de demande à la plate-forme de gestion à distance du second réseau d'opérateur au moyen de l'équipement utilisateur, dans laquelle le premier message de demande est utilisé pour demander un transfert intercellulaire au second réseau d'opérateur, et le premier message de demande comporte l'identité de la carte eUICC ; et
le module d'envoi est en outre configuré, lorsque les informations d'abonnement du second réseau d'opérateur ne sont pas stockées dans la carte eUICC, pour envoyer (204) un second message de demande à la plate-forme de gestion à distance du second réseau d'opérateur au moyen de l'équipement utilisateur, dans laquelle le second message de demande est utilisé pour demander l'acquisition des informations d'abonnement du second réseau d'opérateur, et le second message de demande comporte l'identité de la carte eUICC.

9. Carte à puce électronique universelle intégrée selon la revendication 8, dans laquelle le module de transfert intercellulaire est spécialement configuré, lorsque le message d'indication indique que la vérification de la carte eUICC a échoué, pour ne pas envoyer une instruction de transfert intercellulaire à l'équipement utilisateur, ou pour donner comme instruction à l'équipement utilisateur de ne pas effectuer un transfert intercellulaire au second réseau d'opérateur ; ou
lorsque le message d'indication indique que la vérification de la carte eUICC a réussi, pour donner comme instruction à l'équipement utilisateur d'effectuer un transfert intercellulaire au second réseau d'opérateur.

10. Carte à puce électronique universelle intégrée selon la revendication 9, dans laquelle le module de transfert intercellulaire est en outre spécialement configuré, lorsque le message d'indication indique le verrouillage de la carte eUICC, pour verrouiller la carte eUICC et pour ne pas envoyer une instruction de transfert intercellulaire à l'équipement utilisateur, ou pour donner comme instruction à l'équipement utilisateur de ne pas effectuer un transfert intercellulaire au second réseau d'opérateur ; ou lorsque le message d'indication indique que la carte eUICC présente des arriérés de paiement, pour ne pas envoyer une instruction de transfert intercellulaire à l'équipement utilisateur, ou pour donner comme instruction à l'équipement utilisateur de ne pas effectuer un transfert intercellulaire au second réseau d'opérateur.

11. Plate-forme de gestion à distance d'un second réseau d'opérateur pour un transfert intercellulaire entre un premier et un second réseau d'opérateur, comprenant :
un module de réception (81), configuré pour recevoir, au moyen de la plate-forme de gestion à distance du second réseau d'opérateur, un message de demande envoyé, au moyen d'un équipement utilisateur, UE, par une carte à puce électronique universelle intégrée, eUICC, disposée dans l'équipement utilisateur, dans laquelle le message de demande comporte une identité de la carte eUICC de telle sorte que la plate-forme de gestion à distance du second réseau d'opérateur effectue une vérification concernant la carte eUICC selon au moins l'identité ; en outre dans laquelle le message de demande est un premier message de demande qui est utilisé pour demander un transfert intercellulaire au second réseau d'opérateur si les informations d'abonnement du second réseau d'opérateur sont stockées dans la carte eUICC ou en outre dans laquelle le message de demande est un second message de demande qui est utilisé pour demander l'acquisition des informations d'abonnement du second réseau d'opérateur si les informations d'abonnement du second réseau d'opérateur ne sont pas stockées dans la carte eUICC ; dans laquelle les informations d'abonnement du second réseau d'opérateur sont des informations d'abonnement entre l'équipement utilisateur et le second réseau d'opérateur et sont une base pour déterminer si l'équipement utilisateur est abonné ou non au second réseau d'opérateur ;
un module de vérification (82), configuré pour effectuer (208, 308) une vérification concernant la carte eUICC en fonction d'au moins l'identité pour acquérir un résultat de vérification ; et
un module d'envoi (83), configuré pour envoyer (211, 311) un message d'indication à la carte eUICC au moyen de l'équipement utilisateur en fonction du résultat de vérification de sorte à donner comme instruction à l'équipement utilisateur, en fonction du message d'indication, d'effectuer, ou de ne pas effectuer, un transfert intercellulaire à un second réseau d'opérateur pour l'équipement utilisateur, dans laquelle, si le message de demande est le premier message de demande, le message d'indication comporte des informations d'abonnement acquises du second réseau d'opérateur et dans laquelle, si le message de demande est le second message de demande, le message d'indication comporte des informations d'abonnement acquises du second réseau d'opérateur ainsi que des informations de configuration associées du second réseau d'opérateur.

12. Plate-forme de gestion à distance selon la revendication 11, dans laquelle le module de vérification est spécialement configuré, lorsque le message de demande envoyé par l'équipement utilisateur est reçu, pour acquérir des informations d'abonnement d'un premier réseau d'opérateur en provenance de la carte eUICC ;
le module de vérification est en outre configuré pour envoyer, en fonction des informations d'abonnement acquises du premier réseau d'opérateur, un message de demande de vérification au premier réseau d'opérateur correspondant aux informations d'abonnement du premier réseau d'opérateur, dans laquelle le message de demande de vérification comporte l'identité de la carte eUICC de telle sorte que le premier réseau d'opérateur effectue une vérification concernant l'équipement utilisateur en fonction de l'identité de la carte eUICC, et renvoie un résultat de vérification ; et
en conséquence, le module de réception est en outre configuré pour recevoir le résultat de vérification.

13. Plate-forme de gestion à distance selon la revendication 11, dans laquelle le module de vérification est spécialement configuré, lorsqu'un message de demande envoyé par la carte eUICC est reçu, pour acquérir des informations concernant une plate-forme de gestion à distance correspondant à des informations d'abonnement d'un premier réseau d'opérateur en provenance de la carte eUICC ;
le module de vérification est en outre configuré pour envoyer un message de demande de vérification à la plate-forme de gestion à distance du premier réseau d'opérateur en fonction des informations concernant la plate-forme de gestion à distance correspondant aux informations d'abonnement du premier réseau d'opérateur, de telle sorte que la plate-forme de gestion à distance du premier réseau d'opérateur effectue une vérification concernant l'équipement utilisateur, et renvoie un résultat de vérification ; et
en conséquence, le module de réception est configuré pour recevoir le résultat de vérification.

14. Plate-forme de gestion à distance selon la revendication 11, dans laquelle le module d'envoi est spécialement configuré, lorsque le résultat de vérification indique que la vérification a réussi, pour envoyer le message d'indication à la carte eUICC au moyen de l'équipement utilisateur de sorte à donner comme instruction à la carte eUICC de réaliser un transfert intercellulaire au second réseau d'opérateur ; ou lorsque le résultat de vérification indique que la vérification a échoué et que l'équipement utilisateur est un dispositif non autorisé ou que la carte eUICC est une carte eUICC non autorisée, pour envoyer le message d'indication à la carte eUICC au moyen de l'équipement utilisateur de telle sorte que la carte eUICC se verrouille elle-même, et la carte eUICC n'envoie aucune instruction de transfert intercellulaire à l'équipement utilisateur ou la carte eUICC donne comme instruction à l'équipement utilisateur de ne pas effectuer un transfert intercellulaire au second réseau d'opérateur ; ou
lorsque le résultat de vérification indique que la vérification a échoué et que l'équipement utilisateur présente des arriérés de paiement, pour envoyer le message d'indication à la carte eUICC au moyen de l'équipement utilisateur pour indiquer que l'équipement utilisateur présente des arriérés de paiement de telle sorte que la carte eUICC n'envoie aucune instruction de transfert intercellulaire à l'équipement utilisateur ou que la carte eUICC donne comme instruction à l'équipement utilisateur de ne pas effectuer un transfert intercellulaire au second réseau d'opérateur.
